# EUROPEAN PATENT APPLICATION

(11) **EP 4 841 699 A1**
(43) Date of publication of application: **18.11.2026**
(21) Application number: 25867323.5
(22) Date of filing: 28.03.2025
(51) Int. Cl.: H01M 4/36

(54) **LITHIUM-ION SECONDARY BATTERY, BATTERY DEVICE, ELECTRIC DEVICE, PREPARATION METHOD FOR POSITIVE ELECTRODE ACTIVE MATERIAL, AND PREPARATION METHOD FOR POSITIVE ELECTRODE SHEET**

(71) Applicant: Contemporary Amperex Technology Co., Limited, Ningde, Fujian 352100 (CN)
(72) Inventor: LI, Xiaojing, Ningde Fujian 352100 (CN); JIA, Xiaoyang, Ningde Fujian 352100 (CN); LIU, Hongyu, Ningde Fujian 352100 (CN); BIE, Changfeng, Ningde Fujian 352100 (CN); CHEN, Sheng, Ningde Fujian 352100 (CN); LIANG, Yuli, Ningde Fujian 352100 (CN); NI, Huan, Ningde Fujian 352100 (CN); LIU, Na, Ningde Fujian 352100 (CN); YE, Xinde, Ningde Fujian 352100 (CN); LI, Jia, Ningde Fujian 352100 (CN); ZHANG, Xiaofeng, Ningde Fujian 352100 (CN)
(74) Representative: Gong, Jinping
(86) International application number: PCT/CN2025/085940
(87) International publication number: WO 2026/199532

(57) **Abstract**

The present application provides a lithium-ion secondary battery, a battery apparatus, a power consuming apparatus, a preparation method for a positive electrode active material, and a preparation method for a positive electrode plate. The lithium-ion secondary battery includes a positive electrode plate, a negative electrode plate and an electrolyte, where the positive electrode plate includes a positive electrode current collector and a positive electrode film layer arranged on at least one side of the positive electrode current collector. The positive electrode film layer includes a positive electrode active material, and the positive electrode active material includes lithium-containing transition metal phosphate particles with at least partial surfaces provided with carbon-coated materials. In a cumulative distribution curve of a C value of a graphitization degree of the positive electrode film layer obtained in a mapping mode of a laser microscopic confocal Raman spectrometer, a median C₅₀ of the graphitization degree is greater than or equal to 0.95 and less than or equal to 1.20, and a concentration (C₉₀-C₁₀)/C₅₀ of the C value is 0.01-0.04. The C value of the graphitization degree is I_{G}/I_{D}, where the I_{G} indicates a G-band intensity of a Raman spectrum at 1580±100 cm⁻¹, and the I_{D} indicates a D-band intensity of the Raman spectrum at 1350±100 cm⁻¹.

## Description

### TECHNICAL FIELD

The present application relates to the technical field of lithium-ion batteries, and in particular to a lithium-ion secondary battery, a battery apparatus, a power consuming apparatus, a preparation method for a positive electrode active material, and a preparation method for a positive electrode plate.

### BACKGROUND

In recent years, secondary batteries have been widely used in energy storage power systems such as hydropower, thermal power, wind power and solar power stations, as well as in various fields such as power tools, electric bicycles, electric motorcycles, electric vehicles, military equipment, aerospace.

Positive electrode active materials are an important part of lithium-ion secondary batteries, and lithium-containing transition metal phosphate materials have the characteristics of stable structure, high safety and long cycle life, and have a broad development prospect. With the increase in market requirements for energy density and kinetics of secondary batteries having lithium-containing transition metal phosphate systems, it is difficult to achieve the simultaneous improvement of the above performances in the prior art, which has become a technical problem that needs to be solved urgently in the art.

### SUMMARY

In view of above problems, the present application aims to provide a lithium-ion secondary battery that combines high energy density with good kinetic performance.

In a first aspect, the present application provides a lithium-ion secondary battery, which includes a positive electrode plate, a negative electrode plate and an electrolyte, where the positive electrode plate includes a positive electrode current collector and a positive electrode film layer arranged on at least one side of the positive electrode current collector. The positive electrode film layer includes a positive electrode active material, and the positive electrode active material includes lithium-containing transition metal phosphate particles with at least partial surfaces provided with carbon-coated materials. In a cumulative distribution curve of a C value of a graphitization degree of the positive electrode film layer obtained in a mapping mode of a laser microscopic confocal Raman spectrometer, a median C₅₀ of the graphitization degree is greater than or equal to 0.95 and less than or equal to 1.20, and a concentration (C₉₀-C₁₀)/C₅₀ of the C values is 0.01-0.04. The C value of the graphitization degree is I_{G}/I_{D}, the I_{G} indicates a G-band intensity of a Raman spectrum at 1580±100 cm⁻¹, and the I_{D} indicates the D-band intensity of the Raman spectrum at 1350±100 cm⁻¹.

In this embodiment of the present application, the median C₅₀ of the graphitization degree is more than or equal to 0.95 and less than or equal to 1.20, and the concentration (C₉₀-C₁₀)/C₅₀ of the C values is controlled to be 0.01-0.04, which indicates that the graphitization degree of particles in the positive electrode film layer is high, and the consistency in the graphitization degree is high, namely the positive electrode active material has good coating uniformity and consistency, the particle slippage blockage caused by low graphitization degree of the particles in the positive electrode active material and the resulted local stress concentration can be reduced, and therefore, an electrode plate can integrally achieve a relatively high compaction density under a relatively low rolling pressure by uniform and consistent slippage between the particles of the positive electrode active material. Moreover, a uniform and consistent graphitization degree is conducive to uniform and consistent intercalation and deintercalation of lithium ions, which improves the compaction density of the electrode plate and the energy density of a battery based on keeping good kinetic performance of the battery. In any implementation, in the cumulative distribution curve of the C value of the graphitization degree of the positive electrode film layer obtained in the mapping mode of the laser microscopic confocal Raman spectrometer, the median C₅₀ of the graphitization degree is 0.96-1.15, further, optionally, 0.98-1.13.

The median C₅₀ of the graphitization degree of the positive electrode film layer is within the above range, which is conducive to further improving an easy slippage degree of the particles, further improving the compaction density of the electrode plate while keeping the high kinetic performance of the battery, and achieving the combination of the kinetic performance and the energy density of the battery.

In any implementation, in the cumulative distribution curve of the C value of the graphitization degree of the positive electrode film layer obtained in the mapping mode of the laser microscopic confocal Raman spectrometer, the concentration (C₉₀-C₁₀)/C₅₀ of the C value is 0.02-0.038, optionally, 0.02-0.036.

The concentration (C₉₀-C₁₀)/C₅₀ of the C value is within the above range, which is conducive to further improving the consistency of the graphitization degree of particles in the positive electrode film layer, improving the consistency of slippage between the particles, and reducing an inconsistent intercalation rate due to poor consistency of the graphitization degree of the positive electrode film layer, and thereby causing local polarization. The battery further improves the kinetic performance based on keeping good energy density.

In any implementation, in the cumulative distribution curve of the C value of the graphitization degree of the positive electrode film layer obtained in the mapping mode of the laser microscopic confocal Raman spectrometer, the C₉₀ of the graphitization degree is 1.0-1.30, optionally, 1.02-1.15.

The C₉₀ of the graphitization degree is within the above range and is relatively close to the median C₅₀ of the graphitization degree, which indicates that the distribution interval of the graphitization degree of the particles in the positive electrode film layer is narrow, thus being conducive to the uniform slippage between the particles, and improving the compaction density of the positive electrode plate.

In any implementation, in the cumulative distribution curve of the C value of the graphitization degree of the positive electrode film layer obtained in the mapping mode of the laser microscopic confocal Raman spectrometer, the C₁₀ of the graphitization degree is 0.92-1.10, optionally, 0.98-1.08.

The C₁₀ of the graphitization degree is within the above range, which indicates that different sites in the positive electrode film layer have relatively high graphitization degree, thus being conducive to the uniform slippage between the particles, reducing the occurrence probability of local stress concentration, and further improving the compaction density of the electrode plate.

In any implementation, in a section of the positive electrode film layer along a thickness direction of the electrode plate, an area proportion of particles with an area of 0.001 µm²-0.06 µm² is 21.00%-27.00%, and an area proportion of particles with an area of 1.0 µm²-4.0 µm² is 12.00%-20.00%.

The area proportion of the particles with the area of 0.001 µm²-0.06 µm² and the area proportion of the particles with the area of 1.0 µm²-4.0 µm² in the positive electrode active material are controlled within the above range, and in cooperation with uniform high graphitization degree, uniform slippage of the particles in a compaction process of the electrode plate can be achieved, thus negative effects on other performances such as the kinetic performance, the cycle life and the processing performance of the battery can be reduced while the compaction density of the electrode plate is improved, and the performance of the battery is comprehensively improved.

In any implementation, in the section of the positive electrode film layer along the thickness direction of the electrode plate, D_{A50} of the particles is 600 nm-800 nm, optionally, 650 nm-750 nm, where the D_{A50} refers to a particle size corresponding to a cumulative area distribution of the particles reaching 50% in an area cumulative distribution curve of the particles.

The particle size D_{A50} of the particles is within the above range, which indicates that there is a certain number of large-sized particles in the positive electrode film layer. The median size D_{A50} of the particles is controlled within the above range, thus the transfer efficiency of the rolling pressures among the particles of the electrode plate can be improved through large contact area among the large-sized particles, the framework supporting effect of the large-sized particles is fully exerted, the electrode plate can tolerate higher rolling pressure, and the compaction density of the electrode plate is improved. Moreover, the kinetic reduction caused by overlarge particle size can be reduced, and the kinetic performance of the battery is kept while the compaction density of the electrode plate is improved.

In any implementation, in an area cumulative distribution curve of a particle roughness area obtained in a section of the positive electrode film layer along a thickness direction of the electrode plate, a median R_{A50} of the roughness is 0.92-0.96.

The surfaces of the particles with the median R_{A50} of the roughness within the above range are relatively smooth, so the friction between the particles is relatively low, making them easy to slide by an external force, and in cooperation with the particles with high graphitization degree, an increase in the compaction density of the electrode plates can be achieved even under low rolling pressure, thus further improving the energy density of the battery.

In any implementation, in an area cumulative distribution curve of a particle quasi-roundness obtained in a section of the positive electrode film layer along a thickness direction of the electrode plate, an L_{A90} of the quasi-roundness is 0.80-0.95, optionally, 0.85-0.93.

In any implementation, in an area cumulative distribution curve of a particle quasi-roundness obtained in a section of the positive electrode film layer along a thickness direction of the electrode plate, a median L_{A50} of the quasi-roundness is 0.65-0.85, optionally, 0.70-0.80.

The particles with the medians L_{A90} and L_{A50} of the quasi-roundness in the above range are approximately round, which makes the particles easy to slip by the external force, and in cooperation with the particles with high graphitization degree, the compaction density of the electrode plate can be improved even under low rolling pressure, thus further improving the energy density of the battery.

In any implementation, an iron dissolution rate of the positive electrode film layer is 500 ppm-2000 ppm, optionally, 500 ppm-1500 ppm.

The positive electrode active material with the iron dissolution rate in the above range has a relatively complete and compact carbon-coated layer, which can improve the electric contact among the positive electrode active materials, improve the conductivity of the positive electrode active material, reduce the polarization of the positive electrode active material, and further optimize the kinetic performance of the lithium-ion secondary battery. Moreover, the space occupancy rate of the compactly-coated carbon layer is low, so gaps among the particles are easily compressed by stress in a rolling process, and in cooperation with the carbon-coated layer with high graphitization degree, it is conducive to improving the compaction density of the electrode plate as well as the energy density of the battery.

In any implementation, based on a total mass of the positive electrode active material, the mass content of the carbon element is 0.8%-1.8%, optionally, 0.90%-1.5%.

Compared with the lithium-containing transition metal phosphate positive electrode active material in the prior art, the positive electrode active material has a relatively low content of carbon coating, which can further improve the loading capacity of the lithium-containing transition metal phosphate in the positive electrode plate, and improve the energy density of the lithium-ion secondary battery.

In any implementation, a lithium-iron antisite defect concentration of the positive electrode active material is 0.1%-1.5%, optionally, 0.3%-1.0%.

In this embodiment of the present application, the positive electrode active material has a low lithium-iron antisite defect, which is conducive to uniform transmission of lithium ions in a solid phase and further improves the kinetic performance of the lithium-ion secondary battery.

In any implementation, the lithium-containing transition metal phosphate includes a component having the following general formula: LiₘFeₓP_{y}OⱼQ_{q}, where Q includes one or more of Al, Na, K, Mg, Cu, Mn, Cr, Zn, Pb, Ca, Co, Ni, Sr, Nb, V, Ti, B, S, Si, N, F, Cl, and Br; and 0.8≤m≤1.15, 0.9≤x≤1, 0.95≤y≤1, 3.5≤j≤4, and 0<q≤0.1.

An appropriate modifying element Q can be selected to improve an ion diffusion path of the positive electrode active material, thus improving a lithium ion diffusion rate of the positive electrode active material, as well as improving the kinetic performance of the battery.

In any implementation, the positive electrode active material includes one or more of lithium iron phosphate, a doped modifying material thereof, and a coated modifying material thereof.

In any implementation, the positive electrode active material includes a titanium element, and based on a total mass of the positive electrode active material, a mass content of the titanium element is 2000 ppm-6000 ppm.

In this embodiment of the present application, the positive electrode active material has a high content of titanium element, and surprisingly, a high addition amount of titanium element does not form a harmful impurity phase that produces negative effects on the energy density and the kinetic performance of the battery. Although the reason is unclear, it is speculated that the titanium element, a lithium element, a phosphate group and other elements (such as the lithium element) may form a fast ion conductor, which, instead, improves the kinetic performance of the battery.

In any implementation, a powder tap density of the positive electrode active material is 0.70 g/cm³-1.50 g/cm³, optionally, 0.70 g/cm³-1.20 g/cm³.

In this embodiment of the present application, the positive electrode active material has a relatively low powder tap density, and by virtue of high graphitization degree of the positive electrode film layer and good consistency in the graphitization degree, it is easy to slip by the external force so as to achieve improvement of the powder compaction density.

In any implementation, the powder compaction density of the positive electrode active material under a pressure of 3T is 2.50 g/cm³-2.70 g/cm³, optionally, 2.52 g/cm³-2.68 g/cm³.

By virtue of high graphitization degree and good consistency in the graphitization degree of the positive electrode active material, the positive electrode active material can still keep high compaction density under the external force, which provides a material basis for improving the compaction density of the electrode plate and preparing a lithium-ion secondary battery with high energy density.

In any implementation, a powder resistivity of the positive electrode active material under a pressure of 8 MPa is 0.5 Ω•cm-30 Ω•cm, optionally, 2 Ω•cm-20 Ω•cm.

The positive electrode active material has high graphitization degree, which makes rapid conduction of electrons among the particles easy to be implemented by virtue of a sp² structure of surface carbon, so that the positive electrode active material has a low powder resistivity, which is conducive to improving a solid-phase transmission rate of the electrons and further improving the kinetic performance of the battery.

In any implementation, a discharge capacity per gram of the positive electrode active material at room temperature and under a discharge rate of 1 C is 135 mAh/g-150 mAh/g.

The positive electrode active material has a high discharge capacity per gram under the discharge rate of 1 C, which indicates that the positive electrode active material has a high charge-discharge capacity and is conducive to improving the kinetic performance of the battery.

In any implementation, a proportion of a discharge capacity of the positive electrode active material discharged to 3.2 V is shown as η≥85%, and the η is defined as follows: at room temperature, a button cell containing the positive electrode active material is charged and discharged twice at constant current with a rate of 0.1 C within a voltage range of 2.0 V-3.75 V, and then is charged and discharged once at constant current with the rate of 1 C. In a charge-discharge test with the rate of 1 C, an extracted capacity value under a discharge voltage of 3.2 V is recorded as C₁, the extracted capacity value under the discharge voltage of 2.0 V is recorded as C₂, and η=C₁/C₂, where a charging process includes constant-voltage charging, with a constant voltage of 3.75 V, and a constant-voltage cut-off current of 50 µA.

In this embodiment of the present application, a high proportion of the discharge capacity of the positive electrode active material discharged to 3.2V in the lithium-ion secondary battery indicates that the positive electrode active material has a good kinetic performance. Moreover, a high η value indicates that the lithium-ion secondary battery containing the positive electrode active material still has high voltage when being discharged to a low state of charge (SOC), which is conducive to keeping good power performance.

In any implementation, based on a total mass of the positive electrode film layer, a mass content of a conductive agent is 0%-1.5%.

A carbon layer of the positive electrode active material has high graphitization degree and good consistency in the graphitization degree, so that the positive electrode active material has good electronic conductivity, and the conductive agent used in the positive electrode film layer can be decreased and even eliminated, which is conducive to further improving the loading capacity of the positive electrode active material, and improving the energy density of the lithium-ion secondary battery.

In any implementation, based on a total mass of the positive electrode film layer, a mass content of the conductive agent is 0.

The positive electrode active material has an extremely high electronic conductivity, so the positive electrode film layer is even free of conductive agent, which is conducive to further improving the loading capacity of the positive electrode active material, and improving the energy density of the lithium-ion secondary battery.

In any implementation, the positive electrode film layer further includes a binder. Based on a total mass of the positive electrode film layer, a mass content of the positive electrode active material is 95.5%-99.5%, optionally, 96.5%-99.5%. A mass content of the binder is 0.5%-3%.

In any implementation, a single-side surface density of the positive electrode film layer is 300 mg/1540 mm²-450 mg/1540 mm².

The positive electrode film layer with the surface density in the above range is conducive to improving the energy density of the lithium-ion secondary battery.

In any implementation, when the lithium-ion secondary battery is in a full-discharge state, a compaction density of the positive electrode film layer is 2.51 g/cm³-2.73 g/cm³.

The compaction density of the positive electrode film layer is within the above range, which is conducive to improving the energy density of the lithium-ion secondary battery.

In any implementation, when the lithium-ion secondary battery is in a full-discharge state, a compaction density of the positive electrode film layer is 2.55 g/cm³-2.70 g/cm³.

The compaction density of the positive electrode film layer is within the above range, which is conducive to improving the energy density of the lithium-ion secondary battery.

In any implementation, when the lithium-ion secondary battery is in a full-discharge state, a compaction density of the positive electrode film layer is 2.51 g/cm³-2.73 g/cm³. In a section of the positive electrode film layer along a thickness direction of the electrode plate, a porosity of the positive electrode film layer is 10%-22%.

In any implementation, when the lithium-ion secondary battery is in the full-discharge state, the compaction density of the positive electrode film layer is 2.55 g/cm³-2.70 g/cm³. In the section of the positive electrode film layer along the thickness direction of the electrode plate, the porosity of the positive electrode film layer is 10%-20%.

In this embodiment of the present application, if the porosity in the section of the positive electrode film layer is lower, on one hand, it indicates that the gradation of large, medium and small particles in the positive electrode film layer is preferred, and the compaction density is high. On the other hand, with the same grading and rolling force, if the porosity is low, it indicates that the particles are easy to slide against each other, thus reducing the risks of film layer overpressure and stress concentration, further reducing the de-molding probability of a positive electrode film in a long cycling process, and being conducive to improving the long cycling performance of the battery.

In any implementation, the positive electrode plate includes a bottom coating. The bottom coating is arranged between the positive electrode film layer and the current collector. The bottom coating includes carbon-based particles, and a distribution density of carbon-based particles with a particle size greater than 100 nm in the bottom coating is ≤10 pcs/10 µm.

The bottom coating is conducive to improving the conductivity and binding force between the positive electrode film layer and the current collector, reducing the de-molding of the positive electrode film layer from the current collector in the cycling process, as well as improving the kinetic performance of the battery. In the electrode plate with high compaction density provided by this embodiment of the present application, the distribution density of the carbon-based particles with the particle size greater than 100 nm in the bottom coating is controlled to be ≤10 pcs/10 µm, which is conducive to reducing the probability of damaging the current collector in the electrode plate with high compaction density, and further improving the ultimate compaction density of the positive electrode plate.

In any implementation, the positive electrode plate includes the bottom coating, and the bottom coating is arranged between the positive electrode film layer and the current collector. A compaction density of the positive electrode plate in a full-discharge state is greater than or equal to 2.4 g/cm³, and a single-side thickness of the bottom coating is 1 µm-4 µm.

In any implementation, the positive electrode plate includes the bottom coating, and the bottom coating is arranged between the positive electrode film layer and the current collector. The compaction density of the positive electrode plate in the full-discharge state is greater than or equal to 2.5 g/cm³, and the single-side thickness of the bottom coating is 2 µm-4 µm.

With the improvement of the compaction density of the electrode plate, the extrusion effect of large-particle lithium-containing phosphate materials (for example, the particle size is greater than 1 µm) in the positive electrode film layer on the bottom coating is more significant. Therefore, stress concentration is more likely to occur at the sites of large particles, and the stress even leads to damage to the current collector by penetrating through the bottom coating. Increasing the thickness of the bottom coating is conducive to improving the stress concentration in the electrode plate, further improving the ultimate compaction density of the electrode plate.

In a second aspect, the present application provides a battery apparatus, which includes the lithium-ion secondary battery provided by the present application in the first aspect. The battery apparatus includes at least one of a battery module, a battery pack, and an energy storage battery.

In a third aspect, the present application also provides a power consuming apparatus, which includes the lithium-ion secondary battery provided by the present application in the first aspect or the battery apparatus provided by the present application in the second aspect.

In a fourth aspect, the present application also provides a preparation method for a positive electrode active material, which includes: obtaining a mixed raw material including a carbon source, a lithium source, an iron source and a phosphorus source, where the carbon source includes polyethylene glycol, the iron source includes ferrous iron, and a molar ratio of iron to phosphorus in the mixed raw material is greater than or equal to 0.95 and less than or equal to 1; grinding the mixed raw material in a solvent to obtain a mixed slurry; drying the mixed slurry to obtain a precursor powder; and sintering the precursor powder to obtain the positive electrode active material, where the sintering includes at least two stages of constant-temperature sintering, and a sintering temperature at a high-temperature stage is 750°C-800°C.

The positive electrode film layer prepared from the positive electrode active material prepared by this preparation method has high graphitization degree and good consistency in the graphitization degree, so the compaction density of the electrode plate is easily improved by uniform and consistent slippage between the particles, and it is conducive to improving the energy density of the battery while improving the kinetic performance of the battery.

In a fifth aspect, the present application provides a preparation method for a positive electrode plate, which includes: sequentially adding a binder, a conductive agent and the positive electrode active material prepared by the method in the fourth aspect, carrying out dry mixing, then adding a solvent, and stirring to obtain a discharged slurry; and transferring and coating the discharged slurry to at least one side of a current collector, drying, and carrying out hot pressing to obtain the positive electrode plate.

In any embodiment, a revolution speed in dry mixing is 20 rpm-30 rpm, and a rotation speed in dry mixing is 750 rpm-850 rpm.

In any implementation, the hot pressing includes at least three times of hot rolling, hot rolling pressures are sequentially increased, and the hot rolling pressures are sequentially 20 tons-50 tons, 50 tons-70 tons, and 70 tons-90 tons. The hot roller temperature is 40°C-80°C, the electrode plate is heated before entering a hot roller compaction for a first time, and a temperature of a heating is 40°C-50°C.

The positive electrode active material prepared by the hot pressing process in cooperation with the preparation method in the fourth aspect is conducive to further reducing the porosity of the section of the positive electrode film layer, improving the ultimate compaction density of the electrode plate and improving the energy density of the battery.

### BRIEF DESCRIPTION OF THE DRAWINGS

FIG. 1 is a scanning electron micrograph of a section of a positive electrode film layer along a thickness direction of an electrode plate according to an implementation of the present application;
FIG. 2 is a schematic diagram of a lithium-ion secondary battery according to an implementation of the present application;
FIG. 3 is an exploded schematic diagram of a lithium-ion secondary battery according to an implementation of the present application;
FIG. 4 is a schematic diagram of a battery module according to an implementation of the present application;
FIG. 5 is a schematic diagram of a battery pack according to an implementation of the present application;
FIG. 6 is an exploded schematic diagram of the battery pack in FIG. 5;
FIG. 7 is a schematic diagram of a power consuming apparatus using a lithium-ion secondary battery as a power supply according to an implementation of the present application; and
FIG. 8 is a porosity test diagram in a section of a positive electrode film layer along a thickness direction of an electrode plate according to an implementation of the present application.

### Reference numerals:

1, battery pack; 2, upper box body; 3, lower box body; 4, battery module; 5, lithium-ion secondary battery; 51, case; 52, electrode assembly; and 53, top cover assembly.

### DETAILED DESCRIPTION

Below, the specific implementations of a lithium-ion secondary battery, a battery apparatus, a power consuming apparatus, a preparation method for a positive electrode active material, and a preparation method for a positive electrode plate are described in detail with appropriate reference to the accompanying drawings. However, there may be cases where unnecessary elaboration is omitted. For example, detailed description of a well-known matter, and a duplicate description of the actual same structure are omitted. This is to prevent the following description from becoming unnecessarily lengthy and to facilitate the understanding of those skilled in the art. In addition, the accompanying drawings and the following descriptions are provided for the full understanding of the present application by those skilled in the art and are not intended to limit the subject matter recorded of the claims.

In the present application, the "range" is defined in a form of a lower limit and an upper limit, and a given range is defined by selecting a lower limit and an upper limit, which define the boundaries of a particular range. The range defined by such way can be with or without end values, and can be arbitrarily combined, i.e., any lower limit can be combined with any upper limit to form a range. For example, if ranges of 60-120 and 80-110 are listed for a particular parameter, it is to be understood that the ranges of 60-110 and 80-120 are also expected. In addition, if the minimum range values 1 and 2 are listed, and if the maximum range values 3, 4 and 5 are listed, the following ranges can be all expected: 1-3, 1-4, 1-5, 2-3, 2-4 and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" have been listed in this article, and "0-5" is just an abbreviated representation of these combinations. In addition, when expressing a parameter to be an integer ≥2, it is equivalent to disclosing that the parameter is an integer such as 2, 3, 4, 5, 6, 7, 8, 9, 10, 11, 12.

Unless otherwise specified, all implementations of the present application, as well as optional implementations, may be combined with each other to form a new technical solution, and such technical solution shall be deemed to be included in the disclosure of the present application.

Unless otherwise specified, all the technical features of the present application, as well as the optional technical features, may be combined with each other to form a new technical solution, and such technical solution shall be deemed to be included in the disclosure of the present application.

Unless otherwise specified, all steps in the present application can be carried out sequentially or randomly, preferably sequentially. For example, the method includes steps (a) and (b), indicating that the method may include steps (a) and (b) in sequence, and may also include steps (b) and (a) in sequence. For example, the method may include a step (c), indicating that step (c) may be added to the method in any order, for example, the method may include steps (a), (b) and (c), may also include steps (a), (c) and (b), and may also include steps (c), (a) and (b) and the like.

In the present application, the terms "a plurality of", and "various" refer to two or more than two.

Unless otherwise specified, the terms used in the present application have the meaning of the common knowledge as those normally understood by those skilled in the art.

Unless otherwise specified, the numerical value of each parameter in the present application may be determined by various test methods commonly used in the art, for example, the determination is carried out in accordance with the test methods provided by the embodiments of the present application. Unless otherwise specified, the test temperature for each parameter is 25°C.

The battery mentioned in the embodiments of the present application may be a single physical module including one or more lithium-ion secondary batteries for providing higher voltage and capacity. For example, the battery mentioned in the present application may include the lithium-ion secondary battery, the battery module or the battery pack, etc.

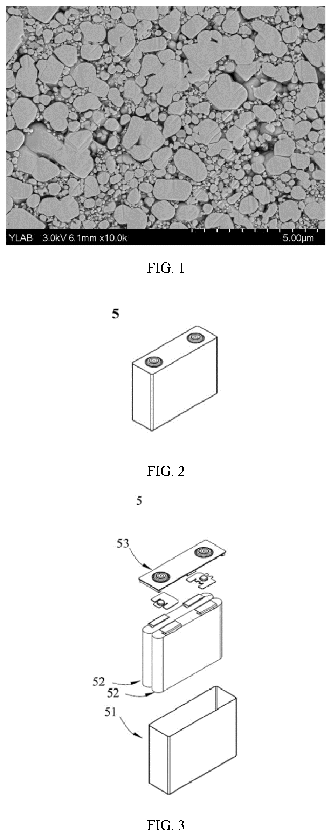

The lithium-ion secondary battery is the smallest cell that forms the battery, and it can independently charge and discharge electricity. The lithium-ion secondary battery may be in a cylindrical, cuboid or other shape, which is not limited in this embodiment of the present application. For example, in FIG. 2, a lithium-ion secondary battery 5 of a cuboid structure is taken as an example.

The lithium-ion secondary battery includes an electrode assembly and an electrolyte.

The lithium-ion secondary battery can also include an outer package, and the outer package can be used for packaging the electrode assembly and the electrolyte. The outer package can be a hard shell, such as a hard plastic shell, an aluminum shell, and a steel shell. The outer package can also be a soft package, such as a bag type soft package. The material of the soft package can be plastic, such as one or more of polypropylene (PP), polybutylene terephthalate (PBT), and polybutylene succinate (PBS).

In some implementations, as shown in FIG. 3, the outer package can include a case 51 and a cover plate 53. The case 51 can include a bottom plate and a side plate connected to the bottom plate, and the bottom plate and the side plate enclose to form an accommodating cavity. The case 51 is provided with an opening in communication with the accommodating cavity, and the cover plate 53 is used to cover the opening so as to close the accommodating cavity. The electrode assembly 52 is packaged in the accommodating cavity. One or more electrode assemblies 52 contained in the lithium-ion secondary battery 5 are provided, and the number can be adjusted according to requirements.

The electrode assembly usually includes a positive electrode plate and a negative electrode plate. The negative electrode plate is an electrode that undergoes the reaction of absorbing or lithiating lithium ions during charging, and releasing or delithiating lithium during discharging, and the positive electrode plate is an electrode that occurs the reaction of releasing or delithiating lithium ions during charging, and absorbing or lithiating lithium during discharging.

When a plurality of lithium-ion secondary batteries are provided, the plurality of lithium-ion secondary batteries are connected in series, parallel, or in series-parallel connection through a bus part. In some implementations, the battery may be a battery module. When the plurality of lithium-ion secondary batteries are provided, the plurality of lithium-ion secondary batteries are arranged and fixed to form a battery module. In some implementations, the battery may be the battery pack, the battery pack includes a box body and the lithium-ion secondary battery, and the lithium-ion secondary battery or the battery module is accommodated in the box body. In some implementations, the box body can be used as a part of a chassis structure of a vehicle. For example, a part of the box body can be used as at least one part of a bottom plate of the vehicle, or, the part of the box body can be used as at least one part of a cross beam and a longitudinal beam of the vehicle.

In some implementations, the battery can be an energy storage apparatus. The energy storage apparatus includes an energy storage container, an energy storage electric cabinet and the like.

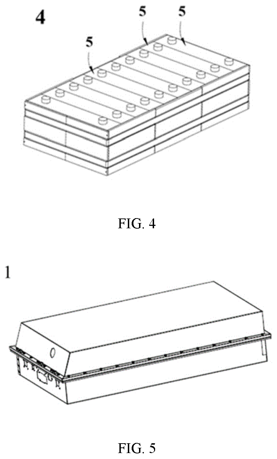

In some implementations, the lithium-ion secondary batteries can be assembled into the battery module. The plurality of lithium-ion secondary batteries contained in the battery module may be provided, and the specific number can be adjusted according to the application and the capacity of the battery module. FIG. 4 is a schematic diagram of a battery module 4 taken as an example. As shown in FIG. 4, in the battery module 4, the plurality of lithium-ion secondary batteries 5 can be sequentially arranged in a length direction of the battery module 4. Of course, the plurality of secondary batteries can also be arranged in any other mode. Further, the plurality of lithium-ion secondary batteries 5 can be fixed by fasteners.

Optionally, the battery module 4 can also include a shell with an accommodating space, and the plurality of lithium-ion secondary batteries 5 are accommodated in the accommodating space.

In some implementations, the above battery modules can also be assembled into a battery pack, and the number of the battery modules contained in the battery can be adjusted according to the application and the capacity of the battery pack.

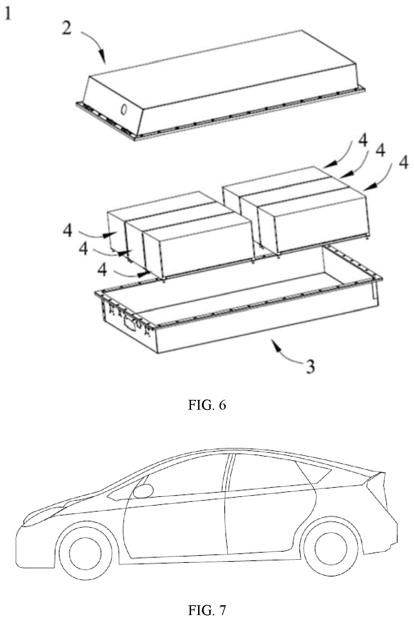

FIG. 5 and FIG. 6 are schematic diagrams of a battery pack 1 taken as an example. As shown in FIG. 5 and FIG. 6, the battery pack 1 can include the box body and a plurality of battery modules 4 arranged in the box body. The box body includes an upper box body 2 and a lower box body 3. The upper box body 2 is used to cover the lower box body 3 and form a closed space for accommodating the battery modules 4. The plurality of battery modules 4 can be arranged in the box body in any mode.

Lithium-containing transition metal phosphate materials have been widely used in the lithium-ion batteries due to their high capacity, stable structure, good safety performance and excellent cycling performance. However, they have the problems of low electronic conductivity and low stacking efficiency, which makes it difficult to further increase the loading capacity of the lithium-containing transition metal phosphate in per unit volume of battery, and the needs of batteries with high energy density cannot be met.

In order to further improve the energy density of the battery and improve the compaction density of the electrode plate, the common method in the industry is to improve the particle gradation. Improving particle gradation often requires increasing the particle size or proportion of large and small particles. However, the increase in large particles will reduce the kinetic performance of the battery, and the increase in small particles will significantly increase the processing cost, which makes the battery side reactions serious and decreases the cycle life of the battery. How to further improve the compaction density of the electrode plate without greatly reducing other properties of the battery and based on meeting the needs of design and processing, so as to achieve the preparation of high energy density batteries is a technical problem that needs to be solved urgently in the art.

In a first aspect, the present application provides a lithium-ion secondary battery. The lithium-ion secondary battery includes a positive electrode plate, a negative electrode plate and an electrolyte. The positive electrode plate includes a positive electrode current collector and a positive electrode film layer arranged on at least one side of the positive electrode current collector. The positive electrode film layer includes a positive electrode active material, and the positive electrode active material includes lithium-containing transition metal phosphate particles with at least partial surfaces provided with carbon-coated materials. In a cumulative distribution curve of a C value of the positive electrode film layer obtained in a mapping mode of a laser microscopic confocal Raman spectrometer, median C₅₀ of a graphitization degree is greater than or equal to 0.95 and less than or equal to 1.20, and a concentration (C₉₀-C₁₀)/C₅₀ of the C value is 0.01-0.04. The C value of the graphitization degree is I_{G}/I_{D}, where the I_{G} indicates a G-band intensity of a Raman spectrum at 1580±100 cm⁻¹, and the I_{D} indicates a D-band intensity of the Raman spectrum at 1350±100 cm⁻¹.

In the cumulative distribution curve of the C value of the graphitization degree of the positive electrode film layer obtained in the mapping mode of the laser microscopic confocal Raman spectrometer, the median C₅₀ of the graphitization degree is less than 0.95, which indicates that the slippage between the particles of the positive electrode film layer is poor, thus the particles are difficult to slip under pressure and fail to form dense packing, and easily cause stress concentration, making it difficult to achieve a high compaction density of the electrode plate. Moreover, researches show that it is usually needed to increase a sintering temperature of the positive electrode active material so as to improve the graphitization degree of the positive electrode film layer. The upgrading of process conditions is conducive to the increase in the graphitization degree of the positive electrode film layer, but due to the limitation of conditions such as uniformity of a temperature field, increasing the graphitization degree of the particles is easy to cause the influence on the uniformity in the graphitization degree of the particles. The researches show that the concentration (C₉₀-C₁₀)/C₅₀ of the C value being greater than 0.04 will lead to an inconsistent lithium intercalation rate due to poor consistency of the graphitization degree of the positive electrode film layer, which causes local polarization and is not conducive to the improvement of the kinetic performance of the battery.

In the present application, researches show that in the cumulative distribution curve of the C value of the graphitization degree of the positive electrode film layer obtained in the mapping mode of the laser microscopic confocal Raman spectrometer, the median C₅₀ of the graphitization degree is more than or equal to 0.95 and less than or equal to 1.20, and the concentration (C₉₀-C₁₀)/C₅₀ of the C values is controlled to be 0.01-0.04, which indicates that the graphitization degree of particles in the positive electrode film layer is high, and the consistency in the graphitization degree is high, namely the positive electrode active material has good coating uniformity and consistency, the particle slippage blockage caused by low graphitization degree of the particles in the positive electrode active material and the resulted local stress concentration can be reduced, and therefore, an electrode plate can integrally achieve a relatively high compaction density under a relatively low rolling pressure by uniform and consistent slippage of between the particles of the positive electrode active material. Moreover, a uniform and consistent graphitization degree is conducive to uniform and consistent intercalation and deintercalation of lithium ions, which improves the compaction density of the electrode plate and the energy density of a battery based on keeping good kinetic performance of the battery.

In this embodiment of the present application, by uniformly improving the graphitization degree of the particles in the positive electrode film layer, the positive electrode active material can easily achieve uniform slippage between the particles by virtue of the carbon-coated materials of the particles in a rolling film forming process, thus further improving the compaction density of the electrode plate while keeping other performance level of the battery, and improving the comprehensive performance of the battery.

Those skilled in the art can adjust the graphitization degree and the concentration of the positive electrode film layer in any known method, for example, related processes of selecting a carbon source, adjusting the carbon coating amount, changing the particle size distribution, controlling the sintering temperature and sintering temperature rising rate are adopted to achieve adjustment of the graphitization degree and the concentration.

In the present application, the term "particle" refers to particles having identifiable complete boundaries in a field of view in the positive electrode film layer at a certain magnification, such as 10,000 times, and there may be defects or scratches inside the particles, but complete boundaries that can divide the particles cannot be identified inside the particles.

A particle identification method is specifically as follows: cut the positive electrode film layer along the thickness direction of the electrode plate by an argon ion beam (as an example, optionally, device model: Leica EM TIC 3X CP; working voltage: 6 kV; working duration: 6 h); and after exposing the section, observe the section of the positive electrode film layer along the thickness direction of the electrode plate by a scanning electron microscope (as an example, optionally, device model: Hitachi SU8230; working voltage: 3 kV; beam current: high; probe model: U (LA100); working distance: <5 mm). A field emission scanning electron microscope is adopted to acquire images at a non-edge position in the section of the positive electrode film layer by a secondary electron mode (after an edge of the electrode plate is observed by the scanning electron microscope, the field of view is adjusted to a center of the sample), an electron micrograph is shot under a magnification of 10k times, and the particles in the electron micrograph are analyzed by ImageJ software (1.46r, win64 version). A use method for the ImageJ software is specifically as follows: load the scanning electron micrograph to be analyzed, as shown in FIG. 1; identify the particles by Cellpose plug-in software, and accordingly carry out manual correction; and read and count data by the Image J. A specific method for identifying the particles by the Cellpose plug-in software is as follows: set a segmentation diameter parameter (diameter in a Segmantation module) to be 15 pixels; and after clicking "run cyto3" for particle identification, manually identify the particles in the image that are not identified by the software or are not completely identified by the software or are identified with errors. The particles in the image that are not identified by software or are not completely identified by the software or are identified with errors mainly include the following conditions: 1, because the particles are too large or scratches are formed in the surfaces of the particles, the particles cannot be identified or cannot be completely identified; 2, scratches will be generated in the surfaces of the particles in an argon ion beam cutting process, and the software may misjudge the scratches as particle boundaries in the identification process, resulting in identification errors; 3, because the particles are too small, the particles fails to be successfully identified; and 4, the particles are at the edge of the field of view of the electron microscope, the edges penetrate through the interiors of the particles, the appearance is not completely displayed, and local appearance is identified instead of the whole appearance, resulting in identification errors. The above particles that are not identified or have identification errors are manually calibrated by the following specific processes: delete large particles that are located at peripheral edges of the scanning electron microscope and are not completely displayed; determine whether there is a gap scratch inside another particle that is not identified or has an identification error or not, and if there is no gap scratch inside the particle, determine the particle as one particle, and manually identify the particle according to a manually observed particle boundary; in response to that there is a gap scratch in the particle, determine whether the gap scratch penetrates through the particle or not, and if the gap scratch does not penetrate through the particle, determine the particle as one particle, and manually identify the particle; in response to that the gap scratch penetrates through the particle, determine whether the gap scratch is linear or irregular; in response to that the gap scratch is irregular, determine the gap scratch as a boundary between the particles, and divide the particles along the boundary; in response to that the gap scratch is linear, carry out contrast comparison; in response to that the contrast comparison is not obvious and there is no crack sense, determine the gap scratch as a scratch, and identify the particle as one particle; and in response to that the contrast comparison is strong and there is crack sense, determine the gap scratch as a boundary between the particles, and identify the gap particle as two particles. After manual identification, information irrelevant to the particle of the image is deleted in an automatic processing process, namely, determination and identification of the particles in the image are completed.

The lithium-containing transition metal phosphate refers to a phosphate material containing a lithium element and a transition metal element and can be detected by any known method in the art. For example, the lithium-containing transition metal phosphate can be detected by an X-ray diffractometer (XRD) combined with an energy spectrum analyzer and an inductively coupled plasma atomic emission spectrometer. As an example, the lithium-containing transition metal phosphate includes, but is not limited to, lithium iron phosphate, lithium manganese iron phosphate and doped materials thereof.

The carbon-coated layer arranged on at least one part of the surface of the lithium-containing transition metal phosphate can be detected by any known method in the art. As an example, the carbon-coated layer arranged on at least one part of the surface of the lithium-containing transition metal phosphate can be observed by the combination of a transmission electron microscope and an energy spectrum analyzer for representing the lithium-containing transition metal phosphate. It is to be noted that elements in the carbon-coated layer are not limited to the carbon element and are also possibly other non-carbon elements. The carbon-coated layer is not limited to a film-shaped coated layer and also includes an island-shaped, irregular or discontinuous coated layer.

Carbon has good conductivity and is good for electron transmission, so that the arranged carbon-coated layer can significantly improve the electronic conductivity of the lithium-containing transition metal phosphate material.

In some implementations, in the cumulative distribution curve of the C value of the graphitization degree of the positive electrode film layer obtained in the mapping mode of the laser microscopic confocal Raman spectrometer, the median C₅₀ of the graphitization degree is more than or equal to 0.95 and less than or equal to 1.20, and the concentration (C₉₀-C₁₀)/C₅₀ of the C value is 0.01 to 0.04. The C value of the graphitization degree is I_{G}/I_{D}, where the I_{G} indicates a G-band intensity of a Raman spectrum at 1580±100 cm⁻¹, and the I_{D} indicates a D-band intensity of the Raman spectrum at 1350±100 cm⁻¹.

In the present application, the C value of the graphitization degree of the positive electrode film layer can be obtained by the laser microscopic confocal Raman spectrometer in the mapping mode. As an example, specifically, the laser microscopic confocal Raman spectrometer (a high-precision Renishaw laser microscopic confocal Raman spectrometer) is adopted. An excitation wavelength of 532 nm is selected, and a proper amount of the positive electrode film layer is taken for mapping on the surface thereof or the section along the thickness direction of the electrode plate. The scanning area is 45 µm×45 µm and is divided into 10×10 grids, grid vertexes are taken as test points, a step length is 5 µm, and there are totally 100 scanning points. Therefore, the C values of different sites and a cumulative distribution curve of the C value in the mapping area are obtained.

In the present application, the positive electrode film layer can be a newly prepared positive electrode film layer, or a positive electrode film layer disassembled from the battery. The surface of the positive electrode film layer disassembled from the battery inevitably has residual electrolyte salt particles. In order to improve testing accuracy, the mapping is preferably performed on the section of the positive electrode film layer along the thickness direction of the electrode plate, so as to represent the graphitization degree of the positive electrode film layer.

The C value of the graphitization degree of the positive electrode film layer is obtained through a band intensity ratio of a G-band to a D-band of a Raman spectrum, the G-band is at the position of 1580±100 cm⁻¹, which represents a carbon sp² hybridized structure. The D-band is at the position of 1350±100 cm⁻¹, which represents a disordered structure of carbon. Disorder represents an irregular arrangement manner between carbon atoms in the structure. In a graphite crystal, the carbon atoms on the same layer are hybridized by sp² to form a covalent bond, and Van der Waals' force exists between layers, so that the carbon of the graphite structure is easy to slide. Therefore, the C value can represent the graphitization degree of the positive electrode film layer. The greater the value is, the higher the graphitization degree of the carbon material is. It may be understood that the graphitization degree in the positive electrode film layer is mainly derived from a carbon material subjected to graphitization treatment in the positive electrode film layer, namely the carbon-coated layer of the positive electrode active material. A carbon nanotube conductive agent rich in the sp² hybridized structure also has relatively high I_{G}/I_{D}, but an addition content of the carbon nanotube conductive agent is small and a tube diameter is small, so the carbon nanotube conductive agent added into the positive electrode film layer exhibits an extreme value in the Raman mapping test of the positive electrode film layer, and will not influence the C₅₀ of the graphitization degree in the positive electrode film layer.

Therefore, the graphitization degree of the positive electrode film layer can also be used for representing the graphitization degree of the positive electrode active material. A higher the graphitization degree of the carbon on the surface of the positive electrode active material is, a higher the proportion of the carbon in the graphite structure in the positive electrode film layer is, which allows the particles to more easily slide through the carbon structure with high graphitization degree in the coated layer during the rolling process, thereby achieving the improvement in the compaction density of the electrode plates even under a low rolling pressure.

The cumulative distribution curve of the C value of the graphitization degree is a curve obtained by arranging at least 100 C values in an ascending sequence, taking the graphitization degree as a horizontal axis and taking a cumulative number proportion as a vertical axis. C₅₀ is a C value corresponding to when the cumulative number proportion on the vertical axis in the cumulative distribution curve of the C value of the graphitization degree is 50%. Compared with a point value, the median C₅₀ of the graphitization degree can reflect an overall graphitization degree of the particles in the positive electrode film layer, namely an easy slippage degree. Compared with a mean value, an influence of an extreme value in a test process can be reduced, and the confidence coefficient of a test result can be improved.

Those skilled in the art can implement the regulation to the graphitization degree of the active material particles by any known process. As an example, the graphitization degree of active material particles can be adjusted by adjusting a carbon source, and optimizing a nucleation process, a sintering temperature, sintering time, a sintering pressure, and a sintering atmosphere.

In some implementations, in the cumulative distribution curve of the C value of the graphitization degree of the positive electrode film layer obtained in the mapping mode of the laser microscopic confocal Raman spectrometer, the median C₅₀ of the graphitization degree is optionally 0.95, 0.96, 0.97, 0.98, 0.99, 1.0, 1.01, 1.02, 1.03, 1.04, 1.05, 1.06, 1.07, 1.08, 1.09, 1.1, 1.11, 1.12, 1.13, 1.14, 1.15, 1.16, 1.17, 1.18, 1.19, 1.20 or a numerical range between any two of the values.

As described above, in the same manner, C₉₀ is a C value corresponding to when the cumulative number proportion on the vertical axis in the cumulative distribution curve of the C value of the graphitization degree is 90%, and C₁₀ is a C value corresponding to when the cumulative number proportion on the vertical axis in the cumulative distribution curve of the C value of the graphitization degree is 10%. The concentration of the C value is represented by (C₉₀-C₁₀)/C₅₀. (C₉₀-C₁₀)/C₅₀ can not only reflect the magnitude of most of the C values, but also is not influenced by the extreme value, and can reflect a distribution range of the graphitization degree of the particles in the positive electrode film layer. The small concentration of the C values of the positive electrode film layer indicates that the distribution range the graphitization degree of the particle in the positive electrode film layer is narrow, and the concentration is good.

In some implementations, in the cumulative distribution curve of the C value of the graphitization degree of the positive electrode film layer obtained in the mapping mode of the laser microscopic confocal Raman spectrometer, the concentration (C₉₀-C₁₀)/C₅₀ of the C value is optionally 0.01, 0.02, 0.03, 0.04 or a numerical range between any two of the values.

In some implementations, in the cumulative distribution curve of the C value of the graphitization degree of the positive electrode film layer obtained in the mapping mode of the laser microscopic confocal Raman spectrometer, the median C₅₀ of the graphitization degree is 0.96-1.15, further, optionally, 0.98-1.13.

The median C₅₀ of the graphitization degree of the positive electrode film layer is within the above range, which is conducive to further improving an easy slippage degree of the particles, further improving the compaction density of the electrode plate while keeping the high kinetic performance of the battery, and achieving the combination of the kinetic performance and the energy density of the battery.

In some implementations, in the cumulative distribution curve of the C value of the graphitization degree of the positive electrode film layer obtained in the mapping mode of the laser microscopic confocal Raman spectrometer, the concentration (C₉₀-C₁₀)/C₅₀ of the C value is 0.02-0.038, optionally, 0.02-0.036.

The concentration (C₉₀-C₁₀)/C₅₀ of the C value is within the above range, which is conducive to further improving the consistency of the graphitization degree of particles in the positive electrode film layer, improving the consistency of slippage between the particles, and reducing an inconsistent intercalation rate due to poor consistency of the graphitization degree of the positive electrode film layer, and thereby causing local polarization. The battery further improves the kinetic performance based on keeping good energy density.

In some implementations, in the cumulative distribution curve of the C value of the graphitization degree of the positive electrode film layer obtained in the mapping mode of the laser microscopic confocal Raman spectrometer, the concentration C₉₀ of the graphitization degree is 1.0-1.3, optionally, 1.02-1.15.

In some implementations, in the cumulative distribution curve of the C value of the graphitization degree of the positive electrode film layer obtained in the mapping mode of the laser microscopic confocal Raman spectrometer, the C₉₀ of the graphitization degree is optionally 1.0, 1.01, 1.02, 1.03, 1.04, 1.05, 1.06, 1.07, 1.08, 1.09, 1.1, 1.11, 1.12, 1.13, 1.14, 1.15, 1.16, 1.17, 1.18, 1.19, 1.2, 1.21, 1.22, 1.23, 1.24, 1.25, 1.26, 1.27, 1.28, 1.29, 1.3 or a numerical range between any two of the values.

The C₉₀ of the graphitization degree is within the above range and is relatively close to the median C₅₀ of the graphitization degree, which indicates that the distribution interval of the graphitization degree of the particles in the positive electrode film layer is narrow, thus being conducive to the uniform slippage between the particles, and improving the compaction density of the positive electrode plate.

In some implementations, in the cumulative distribution curve of the C value of the graphitization degree of the positive electrode film layer obtained in the mapping mode of the laser microscopic confocal Raman spectrometer, the concentration C₁₀ of the graphitization degree is 0.92-1.1, optionally, 0.96-1.08.

In some implementations, in the cumulative distribution curve of the C value of the graphitization degree of the positive electrode film layer obtained in the mapping mode of the laser microscopic confocal Raman spectrometer, the C₁₀ of the graphitization degree is optionally 0.92, 0.93, 0.94, 0.95, 0.96, 0.97, 0.98, 0.99, 1.0, 1.01, 1.02, 1.03, 1.04, 1.05, 1.06, 1.07, 1.08, 1.09, 1.1 or a numerical range between any two of the values.

The C₁₀ of the graphitization degree is within the above range, which indicates that different sites in the positive electrode film layer have relatively high graphitization degree, thus being conducive to the uniform slippage between the particles, reducing the occurrence probability of local stress concentration, and further improving the compaction density of the electrode plate.

In some implementations, in the section of the positive electrode film layer along the thickness direction of the electrode plate, an area proportion of particles with an area of 0.001 µm²-0.06 µm² is 21.00%-27.00%, and an area proportion of particles with an area of 1.0 µm²-4.0 µm² is 12.00%-20.00%.

In the section of the positive electrode film layer along the thickness direction of the electrode plate, an area statistical mode of the particles is specifically as follows. A picture after particle determination and identification is imported into the ImageJ software for analysis, scale setting is implemented according to the scanning electron micrograph, and the particle size of the particles in the picture and the area of the particles are analyzed by "Feret diameter" and "Area" analysis functions. According to the software user guide (ImageJ User Guide IJ 1.46r), the parameter "Feret" obtained by analysis indicates the maximum space between all parallel lines in two-dimensional projection of the particles, which represents the particle size of the particles, and the parameter "Area" indicates the pixel area of the particles, which represents the area of the particles. The particles with the particle size less than 50 nm have a relatively large error in a statistical process and are difficult to be accurately identified, and the particle size of the conductive agent is generally less than 50 nm, so a relatively large error will be resulted for a statistical result. Therefore, in the present application, the particles with the particle size less than 50 nm are not counted in the particle size statistical process, and particle statistical data corresponding to Area displayed as "NaN" is deleted. According to the above method, in order to meet the sample number with statistical significance, no fewer than 10 scanning electron micrographs with non-overlapped fields of view are collected from each electrode plate, the area of no fewer than 5000 particles is counted, and the sum of the parameter "Area" of the particles with the area of 0.001 µm²-0.06 µm² and the sum of the parameter "Area" of all the particles are calculated and are respectively used as the area of the particles with the area of 0.001 µm²-0.06 µm² and the counted total area of the particles. The sum of the area of the particles with the area of 0.001 µm²-0.06 µm² is divided by the counted total area of the particles to obtain the area proportion of the particles with the area of 0.001 µm²-0.06 µm² in the section of the positive electrode film layer along the thickness direction of the electrode plate, and the area proportion of the particles with the area of 1.0 µm²-4.0 µm² can be obtained by the same mode.

The section appearance diagram of the positive electrode film layer along the thickness direction of the electrode plate is shown in FIG. 1, and it is different from the state of the positive electrode active material in a Malvern laser scattering method and is also different from the state of the positive electrode active material when being directly observed by the scanning electron microscope. The particles in the positive electrode film layer are in a good dispersion state under the rolling pressure. The observation to the positive electrode film layer is conducive to effective representation of objective conditions of the particle size, particle area and number of the particles in the positive electrode film layer.

The positive electrode film layer is compacted in the thickness direction during the compaction process, so that the section of the positive electrode film layer along the thickness direction of the electrode plate can reflect the real compaction condition of the particles in the film layer on the space scale compared with the surface of the positive electrode film layer. In the section of the positive electrode film layer along the thickness direction of the electrode plate, the area proportion of the particles with the area of 0.001 µm²-0.06 µm² and the area proportion of the particles with the area of 1.0 µm²-4.0 µm² can intuitively reflect the proportional relationship between partial particle number and the overall particle number in the section with this area, thus reflecting the number of the particles in the section with this area.

It may be understood that the particles in the section of the positive electrode film layer along the thickness direction of the electrode plate, especially the particles over 50 nm, are mainly derived from the positive electrode active material. Therefore, in this embodiment of the present application, the distribution conditions of the lithium-containing transition metal phosphate particles in the positive electrode film layer in the electrode plate can be accurately and objectively reflected by observation statistics of the particle size and the area of the particles in the section of the positive electrode film layer.

Those skilled in the art can implement regulation and control on the particle size of the particles by any known process. As an example, the growth rate and time of the positive electrode material are controlled by regulating and controlling the temperature and time in the preparation process of the positive electrode material. Raw materials are processed to be within a target particle size distribution range by mechanical force in the crushing and ore grinding processes, thus the particle sizes of the particles are adjusted. A particle system is subjected to particle size separation by screening and grading devices, so that the particle size proportion meeting the requirements is obtained. The retention time and stress state of the particles in the devices are adjusted by accurately controlling the feeding rate, which is conducive to the regulation and control on the particle sizes of the particles.

In some implementations, in the section of the positive electrode film layer along the thickness direction of the electrode plate, the area proportion of the particles with the area of 0.001 µm²-0.06 µm² is optionally 21%, 22%, 23%, 24%, 25%, 26%, 27% or a numerical range between any two of the values, and the area proportion of the particles with the area of 1.0 µm²-4.0 µm² is optionally 12%, 13%, 14%, 15%, 16%, 17%, 18%, 19%, 20% or a numerical range between any two of the values.

The area proportion of the particles with the area of 0.001 µm²-0.06 µm² and the area proportion of the particles with the area of 1.0 µm²-4.0 µm² in the positive electrode active material are controlled within the above range, and in cooperation with uniform high graphitization degree, uniform slippage of the particles in a compaction process of the electrode plate can be achieved, thus negative effects on other performances such as the kinetic performance, the cycle life and the processing performance of the battery can be reduced while the compaction density of the electrode plate is improved, and the performance of the battery is comprehensively improved.

In some implementations, in the section of the positive electrode film layer along the thickness direction of the electrode plate, the particle size D_{A50} of the particles is 600 nm-800 nm, optionally, 650 nm-750 nm, where the D_{A50} refers to a particle size corresponding to a cumulative area distribution of the particles reaching 50% in an area cumulative distribution curve of the particles.

In the section of the positive electrode film layer along the thickness direction of the electrode plate, a test method for the particle size D_{A50} of particles is specifically as follows. With reference to the above method, the particle size of no fewer than 5000 particles is counted. The obtained particle size of the at least 5000 particles are arranged according to an ascending sequence, taking the particle size as the horizontal axis, and taking the cumulative area distribution of the particles as the vertical axis, thus obtaining the particle size corresponding to the cumulative area proportion of 50% on the vertical axis in the area cumulative distribution curve of the particles.

In some implementations, in the area cumulative distribution curve of the particle size of the positive electrode active material obtained in the section of the positive electrode film layer along the thickness direction of the electrode plate, the particle size D_{A50} of the particles is optionally 600 nm, 610 nm, 620 nm, 630 nm, 640 nm, 650 nm, 660 nm, 670 nm, 680 nm, 690 nm, 700 nm, 710 nm, 720 nm, 730 nm, 740 nm, 750 nm, 760 nm, 770 nm, 780 nm, 790 nm, 800 nm or a numerical range between any two of the values.

The particle size D_{A50} of the particles is within the above range, which indicates that there is a certain number of large-sized particles in the positive electrode film layer. The median size D_{A50} of the particles is controlled within the above range, thus the transfer efficiency of the rolling pressures among the particles of the electrode plate can be improved through large contact area among the large-sized particles, the framework supporting effect of the large-sized particles is fully exerted, the electrode plate can tolerate higher rolling pressure, and the compaction density of the electrode plate is improved. Moreover, the kinetic reduction caused by overlarge particle size can be reduced, and the kinetic performance of the battery is kept while the compaction density of the electrode plate is improved.

In some implementations, in the area cumulative distribution curve of a particle roughness obtained in the section of the positive electrode film layer along the thickness direction of the electrode plate, a median R_{A50} of the roughness is 0.92-0.96.

In the section of the positive electrode film layer along the thickness direction of the electrode plate, a test method for roughness of particles is specifically as follows: identify the particles in the section of the positive electrode film layer with reference to the above method provided by the present application; import the picture after particle determination and identification into the ImageJ software for analysis; implement scale setting according to the scanning electron micrograph; and analyze the particle size, area and roughness of the particles in the picture by the "Feret diameter", "Area" and "Solidity" functions. According to the software user guide (ImageJ User Guide IJ 1.46r), the parameter "Solidity" obtained by analysis represents the ratio of the pixel area to the convex area of the particles. Therefore, the parameter "Solidity" of the particles obtained by analysis represents the roughness of the particles. According to the definition, the closer the roughness is to 1, the smoother the particles are. The particles with the particle size less than 50 nm have a relatively large error in a statistical process and are difficult to be accurately identified, and the particle size of the conductive agent is generally less than 50 nm, so a relatively large error will be resulted for a statistical result. Therefore, in the present application, the particles with the particle size less than 50 nm are not counted in the particle size statistical process, and particle statistical data corresponding to the Solidity displayed as "NaN" is deleted. According to the above method, in order to meet the sample number with statistical significance, no fewer than 10 scanning electron micrographs with non-overlapped fields of view are collected from each electrode plate. The obtained roughness of at least 5,000 particles is arranged according to an ascending sequence, taking the roughness as the horizontal axis, and taking the cumulative area proportion as the vertical axis so as to obtain the cumulative distribution curve of the roughness of the particles in the positive electrode film layer. R_{A50} is the roughness R value corresponding to the cumulative area proportion of 50% on the vertical axis in the cumulative distribution curve of the roughness R value.

In some implementations, in the area cumulative distribution curve of a particle roughness obtained in the section of the positive electrode film layer along the thickness direction of the electrode plate, the median R_{A50} of the roughness is optionally 0.92, 0.93, 0.94, 0.95, 0.96 or a numerical range between any two of the values.

Those skilled in the art can implement regulation and control on the particle roughness by any known process. As an example, the adjustment of the particle roughness can be implemented by processes of grinding, polishing, milling, micro-machining, electroplating, lapping and the like, and by adjusting the parameters of each process.

The surfaces of the particles with the median R_{A50} of the roughness within the above range are relatively smooth, so the friction between the particles is relatively low, making them easy to slide by an external force, and in cooperation with the particles with high graphitization degree, an increase in the compaction density of the electrode plates can be achieved even under low rolling pressure, thus further improving the energy density of the battery.

In some implementations, in an area cumulative distribution curve of a particle quasi-roundness obtained in the section of the positive electrode film layer along the thickness direction of the electrode plate, the L_{A90} of the quasi-roundness is 0.80-0.95, optionally, 0.85-0.93.

In the section of the positive electrode film layer along the thickness direction of the electrode plate, a test method for the quasi-roundness of the particles is specifically as follows: identify the particles in the section of the positive electrode film layer with reference to the above method provided by this present application; import the picture after particle determination and identification into the ImageJ software for analysis; implement scale setting according to the scanning electron micrograph; and analyze the particle size, area and quasi-roundness of the particles in the picture by the "Feret diameter", "Area" and "Round" analysis functions. According to the software user guide (ImageJ User Guide IJ 1.46r), the parameter "Round" obtained by analysis represents the ratio of the pixel area of the particles to the area of a round taking a fitted long diameter as the diameter and can be used for representing the quasi-roundness of the particles. When the particles are closer to a round, the ratio of the pixel area to the area of the circle taking the fitted long diameter as the diameter is closer to 1. Therefore, the parameter "Round" of the particles obtained by analysis represents the quasi-roundness of the particles. The particles with the particle size less than 50 nm have a relatively large error in a statistical process and are difficult to be accurately identified, and the particle size of the conductive agent is generally less than 50 nm, so a relatively large error will be resulted for a statistical result. Therefore, in the present application, the particles with the particle size less than 50 nm are not counted in the particle size statistical process, and particle statistical data corresponding to Round displayed as "NaN" is deleted. According to the above method, in order to meet the sample number with statistical significance, no fewer than 10 scanning electron micrographs with non-overlapped fields of view are collected from each electrode plate. The obtained quasi-roundness of at least 5,000 particles is arranged according to an ascending sequence, taking quasi-roundness as the horizontal axis, and taking the cumulative area proportion as the vertical axis so as to obtain the cumulative distribution curve of the quasi-roundness of the particles in the positive electrode film layer. The L_{A90} is the quasi-roundness L value corresponding to the cumulative area proportion of 90% on the vertical axis in the cumulative distribution curve of the quasi-roundness L value.

In some implementations, in the area cumulative distribution curve of the particle quasi-roundness obtained in the section of the positive electrode film layer along the thickness direction of the electrode plate, the L_{A90} of the quasi-roundness is optionally 0.80, 0.81, 0.82, 0.83, 0.84, 0.85, 0.86, 0.87, 0.88, 0.89, 0.90, 0.91, 0.92, 0.93, 0.94, 0.95 or a numerical range between any two of the values.

Those skilled in the art can implement regulation and control on the quasi-roundness of the particles by any known process. As an example, the particle quasi-roundness can be adjusted by processes of grinding, polishing, chemical etching, mechanical stirring, extruding, coating, granulating, adding a surfactant and the like, and by adjusting the parameters of each process.

In some implementations, in the area cumulative distribution curve of the particle quasi-roundness obtained in the section of the positive electrode film layer along the thickness direction of the electrode plate, the median L_{A50} of the quasi-roundness is 0.65-0.85, optionally, 0.70 to 0.80.

The L_{A50} is the quasi-roundness L value corresponding to the cumulative area proportion of 50% on the vertical axis in the cumulative distribution curve of the quasi-roundness L value.

In some implementations, in the area cumulative distribution curve of the particle quasi-roundness obtained in the section of the positive electrode film layer along the thickness direction of the electrode plate, the L_{A50} of the quasi-roundness is optionally 0.65, 0.66, 0.67, 0.68, 0.69, 0.70, 0.705, 0.71, 0.72, 0.73, 0.74, 0.75, 0.76, 0.77, 0.78, 0.79, 0.80, 0.81, 0.82, 0.83, 0.84, 0.85 or a numerical range of any two of the values.

The particles with the medians L_{A90} and L_{A50} of the quasi-roundness in the above range are approximately round, which makes the particles easy to slip by the external force, and in cooperation with the particles with high graphitization degree, the compaction density of the electrode plate can be improved even under low rolling pressure, thus further improving the energy density of the battery.

In some implementations, an iron dissolution rate of the positive electrode film layer is 500 ppm-2000 ppm, optionally, 500 ppm-1500 ppm.

The iron dissolution rate of the positive electrode film layer can be tested in the following manner. Specifically, the method includes: disassembling the electrode plate from the battery, cleaning the electrode plate and then punching into small disks with a diameter of 14 mm; taking a plurality of small disk samples to make a total mass of the samples about 5 g, then adding to 100.3 g of an ascorbic acid solution with a mass concentration of 0.3% (a solvent is ultrapure water); stirring for 5 min at a speed of 500 r/min, and then quickly sucking the solution by a 5 mL needle tubing; filtering the solution into a test tube by a filter head with an aperture of 0.45 µm; sucking 1 mL of supernatant by a pipette, and then adding into a glass volumetric flask for diluting by 50 times; testing by an inductively coupled plasma atomic emission spectrometer (ICP-OES) to obtain the concentration of an iron element in the solution; and calculating the iron dissolution rate of the positive electrode film layer by through a formula: [(concentration of iron element tested by ICP x solution volume/mass of used solution with constant volume) x 100.3 g/(mass of electrode plate of small disk - mass of current collector of small disk)], where the solution volume is 50 mL, and the mass of the solution with constant volume is 1 g. Preferably, the mass of the current collector of the small disk is obtained by multiplying the thickness of the small disk by the area and then by the density. The thickness of the small disk can be equivalent by measuring the thickness of the current collector in an uncoated area by a thickness gauge. It may be understood that although the current collector in a coated area can extend in the compaction process, which makes the thickness slightly lower than the uncoated area, but the reduction amplitude can be ignored, which will not cause large influence on the test result. More preferably, when the current collector is an aluminum foil, the density is 2.7 g/cm³. In some implementations, the iron dissolution rate of the positive electrode film layer is optionally 500 ppm, 600 ppm, 700 ppm, 800 ppm, 900 ppm, 1000 ppm, 1100 ppm, 1200 ppm, 1300 ppm, 1400 ppm, 1500 ppm, 1600 ppm, 1700 ppm, 1800 ppm, 1900 ppm, 2000 ppm or a numerical range between any two of the values.

Those skilled in the art can implement regulation and control on the iron dissolution rate of the positive electrode film layer by any known process. As an example, the iron dissolution rate of the positive electrode film layer is regulated and controlled by regulating and controlling the surface coating quality of the positive electrode film layer, and temperature, time and pressure in the preparation process.

The iron dissolution rate can indirectly reflect the integrity and compactness of carbon coating on the surface of the positive electrode active material, and lower iron dissolution rate indicates that iron ions are less likely to be separated out from the carbon-coated layer after acid dissolution, namely, the carbon-coated layer on the surface of the positive electrode active material is more complete and compact. The positive electrode active material with the iron dissolution rate in the above range has a relatively complete and compact carbon-coated layer, which can improve the electric contact among the positive electrode active materials, improve the conductivity of the positive electrode active material, reduce the polarization of the positive electrode active material, and further optimize the kinetic performance of the lithium-ion secondary battery. Moreover, the space occupancy rate of the compactly-coated carbon layer is low, so gaps among the particles are easily compressed by stress in a rolling process, and in cooperation with the carbon-coated layer with high graphitization degree, it is conducive to improving the compaction density of the electrode plate as well as the energy density of the battery.

In some implementations, based on a total mass of the positive electrode active material, a mass content of carbon elements is 0.8%-1.8%, optionally, 0.90%-1.5%.

Based on the total mass of the positive electrode active material, the mass content of the carbon elements can be measured by known methods and devices in the art. For example, with reference to GB/T 21023-2006 "Determination of Total Carbon and Sulfur Content in Iron and Steel-Infrared Absorption Method after Combustion in a High-Frequency Induction Furnace", the measurement is performed using a Dekai HCS infrared carbon-sulfur analyzer

In some implementations, based on the total mass of the positive electrode active material, the mass content of the carbon elements is optionally 0.8%, 0.9%, 1.0%, 1.1%, 1.2%, 1.3%, 1.4%, 1.5%, 1.6%, 1.7%, 1.8% or a numerical range between any two of the values.

Compared with the lithium-containing transition metal phosphate positive electrode active material in the prior art, the positive electrode active material has a relatively low content of carbon coating, which can further improve the loading capacity of the lithium-containing transition metal phosphate in the positive electrode plate, and improve the energy density of the lithium-ion secondary battery.

In some implementations, a lithium-iron antisite defect concentration of the positive electrode active material is 0.1%-1.5%, optionally, 0.3%-1.0%.

An X-ray diffractometer is adopted to collect XRD data of the samples, and the samples are subjected to phase analysis. A CIF file of the phase obtained from an open source-website is used as an initial model of the crystal structure, including definition of cell parameters, an atomic position, a space occupying probability and the like. In the initial model of the crystal structure, due to the possibility of Fe-Li antisite, possible Li content on a Fe site and the possible Fe content on a Li site are set, and the initial value is set to be 0.1%. FullProf Suite software is adopted to perform fitting and fine modification on the collected XRD data, and the parameters are finely modified according to a sequence of background parameters, band intensity, cell parameters and band shape. When the fitting band shape and experiment band shapes are optimal, and Rwp is less than 10, the space occupying probability of the finely modified Li and Fe is obtained, which is used as the lithium-iron antisite defect concentration.

In some implementations, the lithium-iron antisite defect concentration of the positive electrode active material is optionally 0.1%, 0.2%, 0.3%, 0.4%, 0.5%, 0.6%, 0.7%, 0.8%, 0.9%, 1.0%, 1.1%, 1.2%, 1.3%, 1.4%, 1.5% or a numerical range between any two of the values.

Those skilled in the art can implement regulation and control on the lithium-iron antisite defects of the positive electrode active material by any known process. As an example, the regulation and control to the lithium-iron antisite defects of the positive electrode active material can be implemented by regulating and controlling sintering temperature, sintering time, preparation method, raw material metering ratio and the like.

In the preparation and cycling processes, there may be a certain of lithium vacancy inevitably in the crystal structure of the positive electrode active material. The lithium vacancy not only can cause oxidization of ferrous ions into iron ions, but also can induce partial migration of the iron ions to the lithium site to cause the lithium-iron antisite defect, which blocks a one-dimensional diffusion path of the lithium ions and results adverse effects on solid-phase transmission of the lithium ions. In this embodiment of the present application, the positive electrode active material has a low lithium-iron antisite defect, which is conducive to uniform transmission of lithium ions in a solid phase and further improves the kinetic performance of the lithium-ion secondary battery.

In some implementations, the lithium-containing transition metal phosphate includes a component having the following general formula:

LiₘFeₓP_{y}OⱼQ_{q},

where
Q includes one or more of Al, Na, K, Mg, Cu, Mn, Cr, Zn, Pb, Ca, Co, Ni, Sr, Nb, V, Ti, B, S, Si, N, F, Cl, and Br; and 0.8≤m≤1.15, 0.9≤x≤1, 0.95≤y≤1, 3.5≤j≤4, and 0<q≤0.1.

In some implementations, m is optionally 0.8, 0.85, 0.9, 0.95, 0.98, 1.00, 1.03, 1.05, 1.08, 1.10, 1.13, 1.15 or a numerical range between any two of the values; x is optionally 0.9, 0.91, 0.92, 0.93, 0.94, 0.95, 0.96, 0.97, 0.98, 0.99, 1.0 or a numerical range between any two of the values; y is optionally 0.95, 0.96, 0.97, 0.98, 0.99, 1.00 or a numerical range between any two of the values; j is optionally 3.5, 3.6, 3.7, 3.8, 3.9, 4 or a numerical range between any two of j; and Q is optionally 0, 0.01, 0.02, 0.03, 0.04, 0.05, 0.06, 0.07, 0.08, 0.09, 0.1 or a numerical range between any two of the values.

An appropriate modifying element Q can be selected to improve an ion diffusion path of the positive electrode active material, thus improving a lithium ion diffusion rate of the positive electrode active material, as well as improving the kinetic performance of the battery.

In some implementations, the positive electrode active material includes one or more of lithium iron phosphate, a doped modifying material thereof, and a coated modifying material thereof.

In some implementations, the positive electrode active material includes a titanium element, and based on a total mass of the positive electrode active material, a mass content of the titanium element is 2000 ppm-6000 ppm.

The type and content of elements in the positive electrode active material can be tested by any known method in the art. As an example, the titanium element and the content thereof are tested by an inductively coupled plasma emission spectrometry with reference to Appendix C of GB/T 33822-2017.

In some implementations, based on the total mass of the positive electrode active material, the mass content of the titanium element is optionally 2000 ppm, 2500 ppm, 3000 ppm, 3500 ppm, 4000 ppm, 4500 ppm, 5000 ppm, 5500 ppm, 6000 ppm or a numerical range between any two of the values.

The doped titanium element in the positive electrode active material is conducive to causing lattice distortion, thereby reducing Li-O bond energy, improving the lithium ion transmission rate and improving the kinetic performance of the lithium-ion secondary battery. However, in the prior art, the content of the titanium element doped in lithium-containing transition metal phosphate often cannot exceed 3000 ppm, because excessive titanium elements are difficult to completely enter a lithium-containing transition metal phosphate phase, and easy to become harmful impurity phases left on the surface to cause negative effects on the battery performance.

In this embodiment of the present application, the positive electrode active material has a high content of titanium element, and surprisingly, a high addition amount of titanium element does not form a harmful impurity phase that produces negative effects on the energy density and the kinetic performance of the battery. Although the reason is unclear, it is speculated that the titanium element, a lithium element, a phosphate group and other elements (such as the lithium element) may form a fast ion conductor, which, instead, improves the kinetic performance of the battery.

In some implementations, a powder tap density of the positive electrode active material is 0.70 g/cm³-1.50 g/cm³, optionally, 0.7 g/cm³-1.20 g/cm³.

The powder tap density can be tested by any known method in the art.

As an example, the method includes: turning on an electronic balance, taking a conical flask as a base, placing the conical flask on the electronic balance, and then zeroing out the electronic balance; putting a tapping cylinder on the conical flask for weighing, and recording a weight of the cylinder; opening a sample bag, stirring samples in the sample bag for 3-5 circles by a clean sample spoon for uniform mixing, and then stably transferring the samples into the cylinder; wiping powder on the surface of the link by dust-free paper, and then placing into the zeroed-out conical flask for weighing; sealing an opening of the cylinder with a sealing film, and placing the tapping cylinder into a matched instrument rubber ring, so as to ensure that the tapping cylinder is tightly attached to the rubber ring and is kept vertical to the surface of an instrument; setting the vibration frequency of the instrument to be 250 times/min and the vibration frequency to be 5000 times, and pressing a key for vibrating for 20 min; then taking down a TD tube, irradiating the surface of the cylinder with a flashlight, reading the highest scale V₁ and the lowest scale V₂ by a visual inspection method, and taking a mean value V; and subtracting the mass m₀ of the cylinder from the mass m₁ of the cylinder and the sample to obtain the mass m of the powder, and obtaining the compaction density of the sample by a density formula ρ=m/v.

In some implementations, the powder tap density of the positive electrode active material is optionally 0.70 g/cm³, 0.80 g/cm³, 0.90 g/cm³, 1.00 g/cm³, 1.10 g/cm³, 1.20 g/cm³, 1.30 g/cm³, 1.40 g/cm³, 1.50 g/cm³ or a numerical range between any two of the values.

In this embodiment of the present application, the positive electrode active material has a relatively low powder tap density, and by virtue of high graphitization degree of the positive electrode film layer and good consistency in the graphitization degree, it is easy to slip by the external force so as to achieve improvement of the powder compaction density.

In some implementations, a powder compaction density of the positive electrode active material under a pressure of 3T is 2.50 g/cm³-2.70 g/cm³, optionally, 2.52 g/cm³-2.68 g/cm³.

In the present application, the term "powder compaction density" refers to the density of a pressed blank with certain density and strength formed under the condition that in the compression process under the external force, with the movement and deformation of powder, a larger gap is filled, the contact area among particles is increased, the attraction force is generated among atoms, and the mechanical conjunction effect among the particles is enhanced, and the unit is g/cm³.

The powder compaction density of the positive electrode active material can be measured by the known methods and devices in the art. For example, the powder compaction density can be measured by a compaction density instrument with reference to GB/T24533-2009. Specifically, a certain amount of positive electrode active materials is placed on a special compaction mold (the diameter of the mold is known), and the upper part and the lower part of the hollow middle part of the mold are respectively provided with a metal disk. The positive electrode active material is placed between the metal disks, a metal cylinder is placed on a top of the mold, the mold is placed on the compaction density instrument, a bottom area of the mold is 1.327 cm², the pressure is set to be 3T, the thickness of the positive electrode active material under the pressure of 3T can be read from the device, and the powder compaction density of the positive electrode active material is ρ=m/v, where v = (S×H), m is the mass of the positive electrode active material, S is the bottom area of the mold, and H is the thickness of the compacted positive electrode active material.

In some implementations, the powder compaction density of the positive electrode active material under the pressure of 3T is optionally 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm³, 2.68 g/cm³ or a numerical range between any two of the values.

By virtue of high graphitization degree and good consistency in the graphitization degree of the positive electrode active material, the positive electrode active material can still keep high compaction density under the external force, which provides a material basis for improving the compaction density of the electrode plate and preparing a lithium-ion secondary battery with high energy density.

In some implementations, a powder resistivity of the positive electrode active material under a pressure intensity of 8 MPa is 0.5 Ω•cm-30 Ω•cm, optionally, 2 Ω•cm-20 Ω•cm.

The powder resistivity of the positive electrode active material can be measured by the known methods and devices in the art. For example, a powder resistivity instrument (Suzhou Lattice, ST2722) can be adopted for measurement with reference to GB/T33822-2017. Specifically, a certain amount of positive electrode active materials (such as 1 g) is weighed and added to a charging cavity of the powder resistivity instrument, the pressure intensity of 8 MPa is applied to test a forward resistivity and a reverse resistivity of the positive electrode active material respectively, and a mean value of the forward resistivity and the reverse resistivity is taken as the powder resistivity of the positive electrode active material.

In some implementations, the powder resistivity of the positive electrode active material under the pressure of 29400 N is optionally 0.5 Ω•cm, 1 Ω•cm, 2 Ω•cm, 3 Ω•cm, 4 Ω•cm, 5 Ω•cm, 6 Ω•cm, 7 Ω•cm, 8 Ω•cm, 9 Ω•cm, 10 Ω•cm, 15 Ω•cm, 20 Ω•cm, 25 Ω•cm, 30 Ω•cm or a numeral range between any two of the values.

The positive electrode active material has high graphitization degree, which makes rapid conduction of electrons among the particles easy to be implemented by virtue of a sp² structure of surface carbon, so that the positive electrode active material has a low powder resistivity, which is conducive to improving a solid-phase transmission rate of the electrons and further improving the kinetic performance of the battery.

In some implementations, a discharge capacity per gram of the positive electrode active material at room temperature and under a discharge rate of 1 C is 135 mAh/g-150 mAh/g.

In the present application, the positive electrode active material is assembled into a button cell, and the electrical performance of the button cell is tested by a LAND battery tester. The button cell is charged to 3.75 V with a constant current of 1 C at the temperature of 25±5°C in a voltage range of 2.0 V-3.75 V, then is paused for 5 min, charged with constant voltage until reaching a cut-off current of 50 µA, and finally discharged to 2.0 V with the constant current of 1 C. The discharge capacity of the button cell is divided by the mass of the positive electrode active material to obtain the discharge capacity per gram of the positive electrode active material at room temperature under the discharge rate of 1 C.

A preparation and test process of the button cell includes: mix 2.0 g of positive electrode active material, conductive carbon black and PVDF according to a mass ratio of 0.9:0.05:0.05, and then add an organic solvent N-methylpyrrolidone (NMP); after fully and uniformly mixing, coat by a 150 µm scraper; dry at a temperature of 100°C for 2 h; compact the positive electrode plate according to the compaction density of 2.0 g/cm³-2.2 g/cm³; punch the positive electrode plate into round disks with a diameter of 14 mm by a puncher, and then weigh and record the weight; place the weighed positive electrode plate into a vacuum drying oven (105°C,1 h-12 h, -90 kpa); place the dried positive electrode plate into a glove box and assemble them into a battery according to the sequence of negative electrode shell-nickel net-lithium plate-separator-positive electrode plate-positive electrode shell; dropwise add (by a pipette) 65 µL-87 µL of electrolyte (electrolyte is ethylene carbonate (EC) and 1,2-dimethyl carbonate (DMC) mixed solvent based on a volume ratio of 1:1, and electrolyte LiPF₆); place the negative electrode on the upper surface; place the button battery in a groove of a sealing machine for sealing under the pressure of 650 kg/cm²; transfer the button cell by insulating tweezers into a dust-free bag; remove the glove box; and place the dust-free bag in a constant-temperature room for standing for 3 h to obtain the button cell for test.

It may be understood that the discharge capacity per gram of the positive electrode active material can be tested by disassembling the button cell to obtain the positive electrode plate and assembling it into the button cell according to the above method.

In some implementations, the discharge capacity per gram of the positive electrode active material at room temperature and under the discharge rate of 1 C is optionally 135 mAh/g, 136 mAh/g, 137 mAh/g, 138 mAh/g, 139 mAh/g, 140 mAh/g, 141 mAh/g, 142 mAh/g, 143 mAh/g, 144 mAh/g, 145 mAh/g, 146 mAh/g, 147 mAh/g, 148 mAh/g, 149 mAh/g, 150 mAh/g or a numerical range between any two of the values.

The positive electrode active material has a high discharge capacity per gram under the discharge rate of 1 C, which indicates that the positive electrode active material has a high charge-discharge capacity and is conducive to improving the kinetic performance of the battery.

In any implementation, the proportion of the discharge capacity of the positive electrode active material discharged to 3.2 V is shown as η≥85%, and the η is defined as follows: at room temperature, a button cell containing the positive electrode active material is charged and discharged twice at constant current with a rate of 0.1 C within a voltage range of 2.0 V-3.75 V, and then is charged and discharged once at constant current with the rate of 1 C. In a charge-discharge test with the rate of 1 C, an extracted capacity value under a discharge voltage of 3.2 V is recorded as C1, the extracted capacity value under a discharge voltage of 2.0 V is recorded as C2, and η=C1/C2, where the charging process includes constant-voltage charging, with a constant voltage of 3.75 V, and a constant-voltage cut-off current of 50 µA.

The η value of the positive electrode active material can be measured by the known methods and devices in the art. As an example, the button cell is firstly prepared with reference to the above method, the electrical performance of the prepared button cell is tested by the LAND battery tester, and specifically, at room temperature, the button cell is charged and discharged twice with the constant current of 0.1 C within a voltage range of 2.0 V-3.75 V, and then charged with constant current until reaching cut-off voltage, then charged with constant voltage until reaching current of 50 µA, and finally charged and discharged once with constant current at rate of 1 C. In the charge and discharge test at the rate of 1 C, the capacity value in discharging from 3.75 V to 3.2 V is recorded as C1, and the capacity value in discharging from 3.75 V to 2.0 V is C2, and η=C1/C2.

In some implementations, the η is optionally 85%, 86%, 87%, 88%, 88.1%, 89%, 90%, 90.1%, 91%, 92%, 92.2%, 93%, 94%, 94.1%, 94.5%, 95%, 95.1% or a numerical range between any two of the values.

In some implementations, the discharge capacity proportion of the positive electrode active material discharged to 3.2 V in the newly prepared lithium-ion secondary battery is shown as η≥88%. After the newly prepared lithium-ion secondary battery is charged and discharged for a period of time with constant current at the rate of 0.1 C within a voltage range of 2.0 V-3.75 V, the discharge capacity proportion η of the positive electrode active material discharged to 3.2 V can be kept greater than or equal to 85%.

In this embodiment of the present application, a high proportion of the discharge capacity of the positive electrode active material discharged to 3.2V in the lithium-ion secondary battery indicates that the positive electrode active material has a good kinetic performance. Moreover, the high η value indicates that the lithium-ion secondary battery containing the positive electrode active material still has high voltage when being discharged to a low state of charge (SOC), which is conducive to keeping good power performance.

In some implementations, based on the total mass of the positive electrode film layer, the mass content of the conductive agent is 0%-1.5%.

In some implementations, based on the total mass of the positive electrode film layer, the mass content of the conductive agent is optionally 0, 0.1%, 0.2%, 0.3%, 0.4%, 0.5%, 0.6%, 0.7%, 0.8%, 0.9%, 1%, 1.1%, 1.2%, 1.3%, 1.4%, 1.5% or a numerical range between any two of the values.

In some implementations, the conductive agent includes at least one of superconducting carbon, acetylene black, carbon black, Ketjen black, carbon dots, carbon nanotubes, graphene and carbon nanofibers.

A carbon layer of the positive electrode active material has high graphitization degree and good consistency in the graphitization degree, so that the positive electrode active material has good electronic conductivity, and the conductive agent used in the positive electrode film layer can be decreased and even eliminated, which is conducive to further improving the loading capacity of the positive electrode active material, and improving the energy density of the lithium-ion secondary battery.

In some implementations, based on the total mass of the positive electrode film layer, the mass content of the conductive agent is 0.

The positive electrode active material has an extremely high electronic conductivity, so the positive electrode film layer is even free of conductive agent, which is conducive to further improving the loading capacity of the positive electrode active material, and improving the energy density of the lithium-ion secondary battery.

In some implementations, the positive electrode film layer further includes a binder. Based on the total mass of the positive electrode film layer, the mass content of the positive electrode active material is 95.5%-99.5%, and is optionally 96.5%-99.5%. The mass content of the binder is 0.5%-3%.

In some embodiments, the binder includes at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and fluorine-containing acrylate resin.

In some implementations, based on the total mass of the positive electrode film layer, the mass content of the positive electrode active material is optionally 95.5%, 96%, 96.5%, 97%, 98%, 99%, 99.5% or a numerical range between any two of the values.

In some implementations, based on the total mass of the positive electrode film layer, the mass content of the binder is optionally 0.5%, 1%, 1.5%, 2%, 2.5%, 3% or a numerical range between any two of the values.

In some implementations, the single-side surface density of the positive electrode film layer is 300 mg/1540 mm²-450 mg/1540 mm².

In the present application, the single-side surface density of the positive electrode film layer is known in the art and can be tested by the known methods in the art. For example, the positive electrode plate coated on one side and compacted (if the positive electrode plate is coated on two sides, the positive electrode film layer on one side can be wiped off firstly) is taken and punched into small disks with an area of S₁, and the weight of the small disks is weighed and recorded as M₁. Then the positive electrode film layer of the weighed positive electrode plate is wiped off, and the weight of the current collector is weighed and recorded as M₀. The single-side surface density of the positive electrode film layer is (M₁-M₀)/S₁. In order to ensure the accuracy of the test result, a plurality of groups (such as 10 groups) of samples to be tested can be tested, and the mean value is calculated as the test result.

In some implementations, the surface density of the positive electrode film layer on one side is optionally 300 mg/1540 mm², 310 mg/1540 mm², 320 mg/1540 mm², 330 mg/1540 mm², 340 mg/1540 mm², 350 mg/1540 mm², 360 mg/1540 mm², 370 mg/1540 mm², 380 mg/1540 mm², 390 mg/1540 mm², 400 mg/1540 mm², 410 mg/1540 mm², 420 mg/1540 mm², 430 mg/1540 mm², 440 mg/1540 mm², 450 mg/1540 mm² or a numerical range between any two of the values.

The positive electrode film layer with the surface density in the above range is conducive to improving the energy density of the lithium-ion secondary battery.

In some implementations, when the lithium-ion secondary battery is in a full-discharge state, the compaction density of the positive electrode film layer is 2.51 g/cm³-2.73 g/cm³.

In some implementations, when the lithium-ion secondary battery is in a full-discharge state, the compaction density of the positive electrode film layer is 2.55 g/cm³-2.70 g/cm³.

In the present application, the full-discharge state refers to a state that the battery is placed in a drying oven at 25°C and stood for 2 h, and when the temperature of the battery is maintained at 25°C, the battery is discharged to 2.5 V with constant current of 1/3 C and then discharged to 2.0 V with a constant current of 0.1 C.

The compaction density of the positive electrode film layer can be tested by the known methods in the art. As an example, the battery is placed in the drying oven at 25°C and stood for 2 h, and when the temperature of the battery is maintained at 25°C, the battery is discharged to 2.5 V with constant current of 1/3 C and then discharged to 2.0 V with constant current of 0.1 C. The battery is disassembled to obtain the positive electrode plate. The residual electrolyte is treated with a dimethyl carbonate solvent. The electrode plate is dried and cut into small disks with the area of S, and the mass W₁ of the electrode plate is obtained. The thickness T₁ of the positive electrode plate is measured by a ten-thousandth micrometer. Then the positive electrode film layer of the weighed electrode plate is wiped off. The mass of the current collector is weighed and recorded as W₂. The thickness T₂ of the current collector is measured by the ten-thousandth micrometer, and the compaction density of the positive electrode film layer is shown as PD = (W₁-W₂)/[(T₁-T₂)×S].

In some implementations, when the lithium-ion secondary battery is in the full-discharge state, the compaction density of the positive electrode film layer is optionally 2.51 g/cm³, 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm³, 2.68 g/cm³, 2.69 g/cm³, 2.70 g/cm³, 2.71 g/cm³, 2.72 g/cm³, 2.73 g/cm³ or a numerical range between any two of the values.

The compaction density of the positive electrode film layer is within the above range, which is conducive to improving the energy density of the lithium-ion secondary battery.

In some implementations, after treating by a compaction process, the compaction density of the positive electrode film layer is 2.63 g/cm³-2.85 g/cm³.

In some implementations, after treating by the compaction process, the compaction density of the positive electrode film layer is optionally 2.63 g/cm³, 2.64 g/cm³, 2.65 g/cm³, 2.66 g/cm³, 2.67 g/cm³, 2.68 g/cm³, 2.69 g/cm³, 2.70 g/cm³, 2.71 g/cm³, 2.72 g/cm³, 2.73 g/cm³, 2.74 g/cm³, 2.75 g/cm³, 2.76 g/cm³, 2.77 g/cm³, 2.78 g/cm³g/cm³, 2.79 g/cm³, 2.80 g/cm³, 2.81 g/cm³, 2.82 g/cm³, 2.83 g/cm³, 2.84 g/cm³, 2.85 g/cm³ or a numerical range between any two of the values.

In the present application, compaction refers to compacting the positive electrode film layer by mechanical pressure in the battery assembling process so as to improve the compactness and the conductivity of the positive electrode film layer.

In some implementations, after treating by a formation process, the compaction density of the positive electrode film layer is 2.52 g/cm³-2.73 g/cm³.

In some implementations, after treating by the formation process, the compaction density of the positive electrode film layer is optionally 2.52 g/cm³, 2.53 g/cm³, 2.54 g/cm³, 2.55 g/cm³, 2.56 g/cm³, 2.57 g/cm³, 2.58 g/cm³, 2.59 g/cm³, 2.60 g/cm³, 2.61 g/cm³, 2.62 g/cm³, 2.63 g/cm³, 2.64 g/cm³, 2.65 g/cm³, 2.66 g/cm³, 2.67 g/cm³, 2.68 g/cm³, 2.69 g/cm³, 2.70 g/cm³, 2.71 g/cm³, 2.72 g/cm³, 2.73 g/cm³ or a numerical range between any two of the values.

In the present application, formation refers to forming a stable solid electrolyte interface (SEI) film and an electrode structure by an electrochemical reaction in the first charging and discharging process of the battery.

It may be understood that due to rebound of the electrode plate in the cycling process, the compaction density of the positive electrode film layer is slightly lower than the compaction density of the positive electrode film layer after compaction and formation in the full-discharge state of the lithium-ion secondary battery.

The compaction density of the positive electrode film layer is within the above range, which is conducive to improving the energy density of the lithium-ion secondary battery.

In some implementations, the compaction density of the positive electrode film layer is 2.51 g/cm³-2.73 g/cm³, and in the section of the positive electrode film layer along the thickness direction of the electrode plate, the porosity of the positive electrode film layer is 10%-22%.

In some implementations, the compaction density of the positive electrode film layer is 2.55 g/cm³-2.70 g/cm³, and in the section of the positive electrode film layer along the thickness direction of the electrode plate, the porosity of the positive electrode film layer is 10%-20%.

In some implementations, in the section of the positive electrode film layer along the thickness direction of the electrode plate, the porosity of the positive electrode film layer is optionally 10%, 11%, 12%, 13%, 14%, 15%, 16%, 17%, 18%, 19%, 20%, 21%, 22% or a numerical range between any two of the values.

In the section of the positive electrode film layer along the thickness direction of the electrode plate, the porosity of the positive electrode film layer can be tested by the following method. The scanning electron micrograph of the section of the positive electrode film layer along the thickness direction of the electrode plate obtained according to the above method is imported into the ImageJ software, a linear tool is selected, the scale length in the micrograph is marked with a straight line, an "Analyze Set Scale" is clicked, and scale parameters are set in the software according to the scale length in the micrograph. A rectangular tool is selected, a micrograph part outside the scale area is selected, the selected area is duplicated with "Image Duplicate", and the micrograph format is adjusted with "Image Type 8 bit"; the "Analyze Set Measurements" is selected, and the following five items are selected: "Area", "Mean gray value", "Area Fraction", "Limit to threshold", "Feret's diameter". The "Decimal places" is selected as 3, "Image"-"Adjust"-"Threshold" is sequentially selected, 0 and 100 are sequentially set at the framed position of "Threshold", and then, the pore data in the electron micrograph of the section can be exported by the Analyze-Measure function. The "Image"-"Overlay"-"Flatten" is clicked to export the pore image; and "Apply" in "Threshold" is clicked, then "Analyze"-"Analyze Particles" is clicked, and four columns at the left are ticked to obtain the pore statistical data.

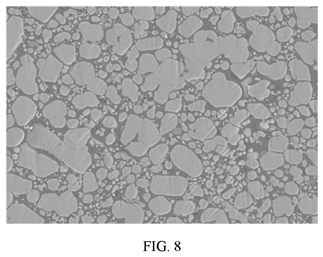

As shown in FIG. 8, it may be understood that "pore" in the section of the positive electrode film layer is identified through image chromatic aberration and threshold in this embodiment of the present application. The "pore" is not pore data obtained in the exhaust test, it is mainly used for representing the sectional area among the particles in the section of the positive electrode film layer. This method is superior to the exhaust method because the porosity obtained by the exhaust method is related to the pores among the particles and is also related to pores in carbon layers coating the surfaces of lithium iron phosphate particles, the pores among the particles cannot be objectively reflected.

If the porosity in the section of the positive electrode film layer tested by this method is lower, on one hand, it indicates that the gradation of large, medium and small particles in the positive electrode film layer is preferred, and the compaction density is high. On the other hand, with the same grading and rolling force, if the porosity is low, it indicates that the particles are easy to slide against each other, thus reducing the risks of film layer overpressure and stress concentration, further reducing the de-molding probability of a positive electrode film in a long cycling process, and being conducive to improving the long cycling performance of the battery.

In any implementation, the positive electrode plate includes a bottom coating, and the bottom coating is arranged between the positive electrode film layer and a current collector. The bottom coating includes carbon-based particles, and the distribution density of the carbon-based particles with the particle size greater than 100 nm in the bottom coating is ≤10 pcs/10 µm.

The carbon-based particles refer to particles taking carbon element as the main component and include, but are not limited to, conductive carbon, carbon black and the like.

The bottom coating is conducive to improving the conductivity and binding force between the positive electrode film layer and the current collector, reducing the de-molding of the positive electrode film layer from the current collector in the cycling process, as well as improving the kinetic performance of the battery. In the electrode plate with high compaction density provided by this embodiment of the present application, for example, when the compaction density of the positive electrode plate in the full-discharge state is greater than or equal to 2.4 g/cm³, the current collector is easily damaged in a high-pressure compaction process of the electrode plate, and large-sized particles easily generate pits in the current collector. The distribution density of the carbon-based particles with the particle size greater than 100 nm in the bottom coating is controlled to be ≤10 pcs/10 µm, which is conducive to reducing the probability of damaging the current collector in the electrode plate with high compaction density, and further improving the ultimate compaction density of the positive electrode plate.

The distribution density of the carbon-based particles with the particle size greater than 100 nm in the bottom coating can be implemented by the above method. The positive electrode film layer is cut off by an argon ion beam along the thickness direction of the electrode plate, and a scanning electron micrograph or a micrograph is shot. The size of the carbon particles in the bottom coating is detected by a statistical method, and the number of the carbon-based particles with the particle size greater than 100 nm in the bottom coating is counted every 10 µm, with the counting performed no fewer than 5 times to obtain the mean value.

In this embodiment of the present application, the bottom coating can be implemented by any known preparation process, for example, operations including sieving or centrifuging and the like are carried out in advance in a carbon-based particle preparation process to remove large carbon-based particles, so that the D_{V50} of the carbon-based particles added in the bottom coating preparation process is 20 nm-60 nm, and the D_{V90} is less than or equal to 70 nm. The carbon-based material and the binder are mixed, stirred and coated on the current collector to obtain the bottom coating.

In some implementations, the compaction density of the positive electrode plate in the full-discharge state is greater than or equal to 2.4 g/cm³, and the single-side thickness of the bottom coating is 1 µm-4 µm.

In some implementations, the compaction density of the positive electrode plate in the full-discharge state is greater than or equal to 2.5 g/cm³, and the single-side thickness of the bottom coating is 2 µm-4 µm.

With the improvement of the compaction density of the electrode plate, the extrusion effect of large-particle lithium-containing phosphate materials (for example, the particle size is greater than 1 µm) in the positive electrode film layer on the bottom coating is more significant. Therefore, stress concentration is more likely to occur at the sites of large particles, and the stress even leads to damage to the current collector by penetrating through the bottom coating. Increasing the thickness of the bottom coating is conducive to improving the stress concentration in the electrode plate, further improving the ultimate compaction density of the electrode plate.

The single-side thickness of the bottom coating can be tested by the following method. As described above, the positive electrode film layer is cut by the argon ion beam along the thickness direction of the electrode plate, the scanning electron micrograph is shot, the single-side thickness of the bottom coating is measured at point in every 1 m in the length direction of the electrode plate, and the mean value is obtained after the thickness of the bottom coating at 10 points is measured. It is to be noted that it is needed to avoid abnormal points in the measurement and point taking process, namely, the bottom coating area with the thickness less than 50 nm and the bottom coating area with the thickness greater than 4 m. These abnormal points are mainly caused by extreme fluctuation of the thickness of an individual area due to abnormal stress concentration extrusion in the compaction process of the electrode plate, and do not have statistical significance.

In some implementations, the thickness of the positive electrode current collector is less than or equal to 17 µm, optionally, 13 µm-15 µm.

In some implementations, the thickness of the positive electrode current collector is 13 µm, 14 µm, 15 µm, 16 µm, 17 µm or a numeral range between any two of the values.

In some implementations, the positive electrode current collector can be a metal foil or a composite current collector. For example, if it is the metal foil, an aluminum foil can be adopted. The composite current collector may include a polymer material substrate and a metal layer formed on at least one surface of the polymer material substrate. The composite current collector can be formed by forming a metal material (aluminum, aluminum alloy, nickel alloy, titanium, titanium alloy, silver, silver alloy and the like) on a polymer material substrate material (such as polypropylene (PP), polyethylene glycol terephthalate (PET), polybutylene terephthalate (PBT), polystyrene (PS), polyethylene (PE)).

In some implementations of the lithium-ion secondary battery, the negative electrode plate includes a negative electrode current collector and a negative electrode film layer arranged on at least one side of the negative electrode current collector, the surface density of the negative electrode film layer on the single side is 140 mg/1540 mm²-221 mg/1540 mm², and/or the compaction density of the negative electrode film layer is 1.40 g/cm³-1.75 g/cm³.

The single-side surface density and the compaction density of the negative electrode film layer can be tested by a method similar to the above method for the positive electrode film layer.

The surface density and the compaction density of the negative electrode film layer are within the above range, which is conducive to improving the energy density of the lithium-ion secondary battery.

In some implementations, the negative electrode current collector can be a metal foil or a composite current collector. For example, if it is the metal foil, a copper foil can be adopted. The composite current collector may include a polymer material substrate and a metal layer formed on at least one surface of the polymer material substrate. The composite current collector can be formed by forming a metal material (copper, copper alloy, nickel, nickel alloy, titanium, titanium alloy, silver, silver alloy and the like) on a polymer material substrate (such as polypropylene (PP), polyethylene terephthalate (PET), polybutylene terephthalate (PBT), polystyrene (PS), polyethylene (PE)).

In some implementations, the negative electrode film layer includes a negative electrode material. The negative electrode active material can be a negative electrode active material which is known in the art and used for the battery. As an example, the negative electrode active material can include at least one of the following materials: artificial graphite, natural graphite, soft carbon, hard carbon, a silicon-based material, a tin-based material, lithium titanate and the like. The silicon-based material can be selected from at least one of monatomic silicon, a silicon-oxygen compound, a silicon-carbon compound, a silicon-nitrogen compound and a silicon alloy. The tin-based material can be selected from at least one of monatomic tin, a tin-oxygen compound and a tin alloy. The present application is not limited to these materials, and other traditional materials which can be used as the negative electrode active material of the battery can also be used. These negative electrode active materials can be used alone or in combination with more than two.

In some implementations, the negative electrode film layer can also optionally include the binder. The binder can be selected from at least one of Styrene Butadiene Rubber (SBR), polyacrylic acid (PAA), sodium Polyacrylate (PAAS), Polyacrylamide (PAM), polyvinyl alcohol (PVA), Sodium Alginate (SA), polymethylacrylic acid (PMAA) and carboxymethyl Chitosan (CS).

In some implementations, the positive electrode film layer can also optionally include the conductive agent. The conductive agent can be selected from at least one of superconducting carbon, acetylene black, carbon black, Ketjen black, carbon dots, carbon nanotubes, graphene and carbon nanofibers.

In some implementations, the negative electrode material can also optionally include other auxiliaries, such as a thickening agent (such as sodium carboxymethylcellulose (CMC-Na).

In some implementations, the negative electrode plate can be prepared by the following steps: disperse the components for preparing the negative electrode plate, such as the negative electrode active material, the conductive agent, the binder and any other component into a solvent (such as deionized water) to form a negative electrode slurry; and coat the negative electrode current collector with the negative electrode slurry, and perform processes of drying, cold pressing and the other processes to obtain the negative electrode plate.

In some implementations, the lithium-ion secondary battery includes an electrolyte. The electrolyte plays a role in conducting ions between the positive electrode plate and the negative electrode plate. In the present application, there is no specific limitation to the type of the electrolyte, and the electrolyte can be selected as required. For example, the electrolyte can be in a liquid state, a gel state or an all-solid state.

In some implementations, the electrolyte is an electrolyte. The electrolyte includes an electrolyte salt and a solvent.

In some implementations, the electrolyte salt be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoroborate, lithium bis(oxalate)borate, lithium difluorooxalate phosphate and lithium tetrafluoroborate.

In some implementations, the solvent be selected from at least one of ethylene carbonate, propylene carbonate, methyl ethyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfolane, methyl ethyl sulfone and ethyl sulfone.

In some implementations, the electrolyte can also optionally include additives. For example, the additives may include a negative electrode film-forming additive and a positive electrode film-forming additive, and may also include additives that can improve certain performances of the battery, such as additives that can improve the overcharge performance of the battery, and additives that can improve the high-temperature or low-temperature performance of the battery.

In some implementations, the lithium-ion secondary battery also includes a separator. The type of the separator is not specially limited in the present application, and any well-known porous separator with high chemical stability and mechanical stability can be selected.

In some implementations, the materials of the separator can be selected from at least one of glass fiber, non-woven fabric, polyethylene, polypropylene and polyvinylidene fluoride. The separator can be a single-layer film or a multi-layer composite film, which is not specially limited. When the separator is the multi-layer composite film, the materials of all layers can be the same or different, which are not specially limited.

In some implementations, the positive electrode plate, the negative electrode plate and the separator can be made into an electrode assembly by a winding process or a lamination process.

In some implementations, the lithium-ion secondary battery can include an outer package. The outer package can be used for packaging the electrode assembly and the electrolyte.

In some implementations, the outer package of the lithium-ion secondary battery can be a hard shell, such as a hard plastic shell, an aluminum shell, and a steel shell. The outer package of the secondary battery can also be a soft package, such as a bag type soft package. The material of the soft package can be plastic, such as polypropylene, polybutylene terephthalate, and polybutylene succinate.

In a second aspect, the present application provides a battery device, which includes the lithium-ion secondary battery provided by the present application in the first aspect, and the battery apparatus includes at least one of the battery module, the battery pack, and an energy storage battery.

In a third aspect, the present application provides a power consuming apparatus, which includes the lithium-ion secondary battery provided by the present application in the first aspect.

In a fourth aspect, the present application provides a preparation method for a positive electrode active material, which includes: obtain a mixed raw material including a carbon source, a lithium source, an iron source and a phosphorus source, where the carbon source includes polyethylene glycol, the iron source includes ferrous iron, and a molar ratio of iron to phosphorus in the mixed raw material is greater than or equal to 0.95 and less than or equal to 1; grind the mixed raw material in a solvent to obtain a mixed slurry; dry the mixed slurry to obtain a precursor powder; and sinter the precursor powder to obtain the positive electrode active material, where the sintering includes at least two stages of constant-temperature sintering, and a sintering temperature at a high-temperature stage is 750°C-800°C.

According to the preparation method provided by this embodiment of the present application, the graphitization degree of the positive electrode active material is improved by regulating and controlling the molar ratio of iron to phosphorus in the mixed raw material, furthermore, polyethylene glycol is adopted as the carbon source, and in cooperation with sintering temperature control and ferrous iron catalytic reduction, the graphitization degree of particles in the positive electrode film layer is uniformly improved. A material foundation is provided for preparing the positive electrode film layer with the median C₅₀ of the graphitization degree being greater than or equal to 0.95 and less than or equal to 1.20 and the concentration (C₉₀-C₁₀)/C₅₀ of 0.01-0.04 of the C value.

The positive electrode film layer prepared from the positive electrode active material prepared by this preparation method has high graphitization degree and good consistency in the graphitization degree, so the compaction density of the electrode plate is easily improved by uniform and consistent slippage between the particles, and it is conducive to improving the energy density of the battery while improving the kinetic performance of the battery.

In some implementations, the iron source includes ferrous iron, optionally, one or more of ferrous oxalate, ferrous carbonate, and ferrous nitrate.

In the sintering process, the ferrous iron will be preferentially decomposed to generate a lot of ferrous oxide which is used as a nucleation position for generating a nano crystal nucleus of the lithium-containing transition metal phosphate. Moreover, a polymer carbon source has a relatively low decomposition temperature, and the iron element on the surface of the crystal nucleus in the nano crystal nucleus will further catalyze the decomposition of the carbon source, so that the carbon-coated layer on the surface of the positive electrode active material has relatively high graphitization degree at a relatively low sintering temperature, thereby reducing the resistivity of the positive electrode active material, and improving the compactness and uniformity of the carbon-coated layer coating the surface of lithium-containing transition metal phosphate.

In some implementations, the phosphorus source includes one or more of lithium dihydrogen phosphate, phosphoric acid and ammonium dihydrogen phosphate.

In some implementations, the lithium source and the phosphorus source can be the same substance.

In some implementations, the iron source includes ferrous oxalate, the lithium source and the phosphorus source include lithium dihydrogen phosphate, and the carbon source includes polyethylene glycol.

In some implementations, the atomic molar ratio of the iron element to the phosphorus element in the iron source and the phosphorus source is (0.95:1.0) to (1.0:1.0).

In some implementations, the atomic molar ratio of the iron element to the phosphorus element in the iron source and the phosphorus source is optionally 0.95:1.0, 0.96:1.0, 0.97:1.0, 0.98:1.0, 0.99:1.0, 1.0:1.0 or a numeral range between any two of the values.

Both high and low iron-to-phosphorus ratio will lead to structural instability. The low iron-to-phosphorus ratio may cause incomplete lithium occupancy, reducing the ionic conductivity and structural stability of the material. The high iron-to-phosphorus ratio will lead to excess iron, affecting the electrochemical stability and capacity output of LiFePO₄. An appropriate iron-to-phosphorus ratio can promote uniform crystal growth and prevent particle aggregation or excessive particle size variation during synthesis. If the iron-to-phosphorus ratio is too high, excessive iron ions may form large particles during the reaction, affecting particle size consistency. If the ratio is too low, phosphate may not participate fully in the reaction, leading to incomplete particle growth and consequently affecting particle uniformity.

In some implementations, the particle size D₁₀ of ferrous oxalate is greater than or equal to 3 µm, the particle size D₅₀ is 50 µm-80 µm, and the particle size D₉₀ is less than or equal to 150 µm.

In the present application, the terms "D₁₀", "D₅₀" and "D₉₀" respectively correspond to the particle size corresponding to the cumulative particle size distribution percentage of the particle size of the samples tested by the Malvern laser scattering method reaching 10%, 50% and 90%.

The proportion of ferrous oxalate particles with small particle size can be reduced by controlling the particle size D₁₀ of ferrous oxalate to be greater than or equal to 3 µm, thereby controlling its reaction activity in the grinding process. Controlling the particle size D₅₀ and D₉₀ of ferrous oxalate is conducive to uniform mixing of raw materials in the grinding process, thus obtaining the mixed slurry with consistent components and uniform particle size, as well as improving the particle size consistency of prepared lithium-containing transition metal phosphate.

In some implementations, the mass content of ferric element is less than or equal to 0.08%.

In some implementations, the mass content of the ferric element is optionally 0.01%, 0.02%, 0.03%, 0.04%, 0.05%, 0.06%, 0.07%, 0.08% or a numeral range between any two of the values.

Controlling the mass content of trivalent iron is conducive to improving the uniformity and consistency of the carbon-coated layer. The trivalent iron with high content will preferentially consume the carbon source, leading to poor consistency in the quality and thickness of the carbon layer coated between particles. On one hand, the uneven thickness of the carbon-coated layer will affect the compaction between the particles. On the other hand, local carbon deficiency will impact the overlap of the conductive network between particles, which is not conducive to the effective increase of the compaction density of the electrode plate and the improvement of kinetics.

In some implementations, the lithium source includes one or more of lithium dihydrogen phosphate, lithium phosphate, lithium carbonate and lithium acetate.

In some implementations, the carbon source includes a polymer carbon source, optionally, one or more of polyethylene glycol and polyvinyl alcohol.

In some implementations, based on the total mass of the positive electrode film layer, the mass content of the carbon source is 1%-4%.

The polymer carbon source has relatively low decomposition temperature and graphitization temperature, so that the carbon-coated layer on the surface of the positive electrode active material can be decomposed to form the carbon layer at a relatively low sintering temperature, which hinders the growth and sintering growth of lithium-containing transition metal phosphate crystal grains and being conducive to the reduction of the particle size of the positive electrode active material particles.

Moreover, the polymer carbon source usually has relatively high molecular weight or relatively long molecular chain, and is easy to form a stable framework structure by crosslinking or orientation in a heat treatment process. Such orderliness is retained in a high-temperature carbonization process, which is conducive to the directional growth of graphite crystals. Moreover, the winding and crosslinking among long chains are conducive to the reduction of structural defects as well as the reduction of disordered crystal lattices caused by chain breakage in the carbonization process, thereby improving the graphitization degree.

Organic molecules in the carbon source will be decomposed at high temperature to release carbon atoms, these carbon atoms can cover and fill tiny gaps or defects on the surface of the active material, thus reducing the surface roughness. The coating layer formed by the polymer carbon source has relatively high a graphitization degree, and the carbon structure is compact, which is conducive to optimizing the surface roughness of the positive electrode active material.

In some implementations, the weight-average molecular weight of polyethylene glycol is less than 10000.

In some implementations, the weight-average molecular weight of the polyethylene glycol is optionally 1500, 2000, 3000, 4000, 6000, 8000 or a numeral range between any two of the values.

The decomposition speed in the sintering period can be controlled by the polyethylene glycol with the weight-average molecular weight less than 10000, so as to form the carbon-coated layer with proper and uniform thickness.

In some implementations, the water content of the polyethylene glycol is less than or equal to 0.5%.

If the water content in the polyethylene glycol is relatively high, the water may influence the decomposition process, causing incomplete decomposition of the polyethylene glycol or non-uniform decomposition speed in the sintering process. Excessive water may cause non-uniform distribution of the fused polyethylene glycol in the sintering process, influencing the uniformity of the carbon layer, and resulting in unstable or peeling off of the carbon-coated layer.

In some implementations, the water content of the polyethylene glycol is optionally 0, 0.1%, 0.2%, 0.3%, 0.4%, 0.5% or a numerical range between any two of the values.

In some implementations, the pH of the polyethylene glycol is 5-7.

The polyethylene glycol with pH of 5-7 is relatively high in stability, cannot be degraded a mixing process due to peracid, and particularly can be decomposed too fast under a high-temperature condition to influence the quality of the coating layer. If the polyethylene glycol is alkaline, it may influence the stability of other components, consequently, metal ions are dissolved or oxidized to influence the performance of the final positive electrode active material.

In some implementations, the slurry also includes a titanium source, and optionally, the titanium source includes one or more of titanium dioxide, tetrabutyl titanate, titanium nitrate and titanic acid.

The titanium source often has relatively low surface activity, and the slurry including the titanium source can reduce the activity of a lithium-containing transition metal phosphate precursor and inhibit the particle growth of lithium-containing transition metal phosphate in a high-temperature sintering process, and therefore, the lithium-containing transition metal phosphate can form relatively small particles in the sintering process.

Titanium is used as a lattice stabilizer, the titanium element usually enters lattices of the lithium-containing transition metal phosphate in a form of Ti⁴⁺, and part of titanium ions can replace the positions of iron ions, which makes the crystal structure more stable, and reduces the possibility of inversion of lithium and iron ions, particularly high-temperature or high-current charging and discharging.

In some implementations, lithium dihydrogen phosphate, ferrous oxalate, polyethylene glycol and titanium dioxide are uniformly mixed in an organic solvent and ground to obtain the mixed raw material.

The organic solvent can effectively reduce side reactions and improve the purity and consistency of the material. Moreover, the organic solvent has relatively good volatility, is easier to be removed in the subsequent drying process, and cannot remain in the material to cause pores in the material to influence the compactness and structural stability of the material.

In some implementations, based on the total mass of the mixed raw material, the mass ratio of the carbon source in the mixed raw material is 5%-7%.

In some implementations, based on the total mass of the mixed raw materials, the mass ratio of the carbon source in the mixed raw materials is optionally 5%, 5.1%, 5.2%, 5.3%, 5.4%, 5.5%, 5.6%, 5.7%, 5.8%, 5.9%, 6.0%, 6.1%, 6.2%, 6.3%, 6.4%, 6.5%, 6.6%, 6.7%, 6.8%, 6.9%, 7% or a numerical range between any two of the values.

By controlling the mass content of the carbon source to be within the above range, the conductivity of the material can be enhanced, and the negative effects on the specific capacity of the positive electrode plate and the energy density of the battery are reduced. An over-thick carbon layer not only occupies effective active material space, but also may cause structural instability of the material.

In some implementations, the solvent includes water and a mixture thereof.

In some implementations, the obtaining the mixed raw material including the carbon source, the lithium source, the iron source and the phosphorus source includes: adding the carbon source, the lithium source, the phosphorus source, the iron source and the carbon source to the solvent, and mixing and stirring at speed of 1400 rpm-2200 rpm.

In some implementations, the obtaining the precursor powder after drying the mixed slurry includes: spray-drying the mixed slurry to obtain the precursor powder.

In some implementations, after the precursor is sintered, the product is subjected to airflow crushing to obtain the positive electrode active material.

In some implementations, the classification frequency in airflow crushing is 18 Hz-24 Hz, and the crushing air pressure is 0.45 MPa-0.65 MPa.

The classification frequency in airflow crushing refers to the working frequency of a classification device in airflow crushing, and it is usually related to the classification efficiency and the particle size distribution of particles. At high classification frequency, the particles in airflow can be screened more times, which can screen out large particles and remain small particles. High classification frequency may increase the number of times of collision of the particles, causing irregular particles to experience further impacts, making their surfaces smoother and their shapes more spherical.

At high air pressure, the particles will be subjected to greater impact force, which makes collision among the particles more severe, resulting in strong impact and abrasion on the surfaces of the particles. Therefore, large particles can be crushed into small particles, the collision among the particles is more severe, the surfaces are easier to be modified, and the quasi-roundness and the surface flatness of the particles are improved.

However, excessively high classification frequency and crushing air pressure may disperse aggregated particles into primary particles to be further cracked and broken, which affects the preset particle gradation distribution, and results in an incomplete carbon-coated layer, representing as an increase in iron leaching. It has a negative impact on the sliding of the particles in rolling and increases the contact and reaction between lithium-containing transition metal phosphates and electrolytes and other external factors, which is not conducive to the cycling performance and service life of the battery. Therefore, it is needed to control the classification frequency and crushing air pressure of the airflow grinding within an appropriate range.

In a fifth aspect, the present application provides a preparation method for a positive electrode plate, the preparation method includes: sequentially add a binder, a conductive agent, and the positive electrode active material prepared by the preparation method in the fourth aspect, carry out dry mixing, then add a solvent, and stir, and adjust viscosity to obtain a discharged slurry; and transfer and coat the discharged slurry to at least one side of the current collector, dry, and carry out hot pressing to obtain the positive electrode plate.

In some implementations, the revolution speed in dry mixing is 20 rpm-30 rpm, and the rotation speed in dry mixing is 750 rpm-850 rpm.

In some implementations, the hot pressing includes at least three times of hot rolling, hot rolling pressures are sequentially increased, and the hot rolling pressures are sequentially 20 tons-50 tons, 50 tons-70 tons, and 70 tons-90 tons. The hot roller temperature is 40°C-80°C, the electrode plate is heated before entering a hot roller compaction for a first time, and a temperature of a heating is 40°C-50°C.

In this embodiment of the present application, the positive electrode active material prepared by the hot pressing process in cooperation with the preparation method in the fourth aspect is conducive to further reducing the porosity of the section of the positive electrode film layer, improving the ultimate compaction density of the electrode plate and improving the energy density of the battery.

In addition, the present application further provides a power consuming apparatus, which includes at least one of the lithium-ion secondary battery, the battery module, or the battery pack provided by the present application. The lithium-ion secondary battery, the battery module or the battery pack can be used as a power supply for the power consuming apparatus and can also be used as an energy storage unit for the power consuming apparatus. The electric device can include a mobile device (such as a mobile phone, and a notebook computer), an electric vehicle (such as a pure electric vehicle, a hybrid electric vehicle, a plug-in hybrid electric vehicle, an electric bicycle, an electric scooter, an electric golf cart, and an electric truck), an electric train, a ship, a satellite, an energy storage system and the like, but not limited thereto.

As the power consuming apparatus, the lithium-ion secondary battery, the battery module or the battery pack can be selected according to the use requirements.

FIG. 7 is a power consuming apparatus taken as an example. The electric device is the pure electric vehicle, the hybrid electric vehicle, the plug-in hybrid electric vehicle or the like. In order to meet the requirements of the power consuming apparatus on high power and high energy density of the lithium-ion secondary battery, the battery pack or the battery module can be adopted.

As another example, the device can be the mobile phone, a tablet personal computer, the notebook computer and the like. The apparatus is generally required to be light and thin, so the lithium-ion secondary battery can be adopted as the power supply.

### Examples

The embodiments of the present application are illustrated below. The embodiments described below are illustrative and are intended only to interpret the present application and should not be construed as a limitation on the present application. If the specific technology or conditions are not indicated in the embodiments, the technology or conditions described in the literature in the art or in accordance with the product specification shall be followed. If the manufacturer of the reagent or instrument is not indicated, it is a conventional product that can be obtained through commercial purchase.

### Example 1

### (1) Preparation of positive electrode active material

Lithium dihydrogen phosphate, ferrous oxalate, polyethylene glycol and titanium dioxide were uniformly mixed in a solvent, and ground. The molar ratio of iron to phosphorus was 0.965:1.0 due to the ratio of ferrous oxalate to lithium dihydrogen phosphate.

The mixed raw materials were subjected to ball milling by a ball mill for a plurality of times, and demagnetized to obtain mixed slurry. The grinding times and time were controlled, and the particle size Dv50 of the ground mixed slurry was 3.0 µm.

Spray drying was performed on the mixed slurry to obtain dried precursor powder, and the dried precursor powder was light yellow in appearance and uniform in color.

The precursor powder was put into a sintering furnace and heated from 25°C to 350°C at a speed of 2°C/min in a nitrogen atmosphere, and was subjected to temperature maintaining for 3h at this temperature, and then, the precursor powder was heated to reach a second temperature of 770°C at a speed of 5°C/min, and subjected to temperature maintaining for 10h at this temperature, and then cooled.

The obtained lithium iron phosphate positive electrode material was crushed by an airflow crushing method so as to obtain a carbon-coated lithium iron phosphate positive electrode active material.

The mass content of carbon element in the positive electrode active material was 1.103%, the median L_{A50} of the quasi-roundness was 0.720, the L_{A90} was 0.895, the median R_{A50} of the roughness was 0.941, the lithium-iron antisite defect concentration was 0.55%, the powder tap density was 1.04 g/cm³, the powder compaction density under the pressure of 3T was 2.572 g/cm³, and the powder resistivity under the pressure of 8 MPa was 5.90 Ω•cm. The discharge capacity per gram under the discharge rate of 1 C was 143.8 mAh/g. The discharge capacity proportion of a 3.2 V discharge platform was 91.0%.

### (2) Preparation of positive electrode plate

2.2wt% of PVDF, 0.8wt% of conductive carbon black, and 97.0wt% of the positive electrode active material were sequentially added and subjected to dry mixing, then N-methyl pyrrolidone was added and stirred, the viscosity was adjusted to obtain the discharged slurry. The discharged slurry was transferred and coated on the bottom coating of the aluminum foil of the current collector. The bottom coating included carbon black and PVDF based on the mass ratio of 1:1, the distribution density of the carbon-based particles with the particle size greater than 100 nm in the bottom coating was ≤10 pcs/10 µm, and the thickness of the bottom coating was 2 µm. After drying and hot pressing, a positive electrode film layer with the single-side surface density of 350 mg/1540 cm² was obtained.

The revolution speed in dry mixing was 25 rpm, and the rotation speed in dry mixing was 800 rpm.

The hot pressing process included three times of hot rolling, the hot rolling pressures were sequentially increased, and the hot rolling pressures were sequentially 35 tons, 55 tons and 75 tons. The hot roller temperature was 65°C, and the electrode plate was heated before entering a hot roller compaction for a first time, and a temperature of a heating was 50°C.

The compaction density of the electrode plate is the ultimate compaction density of the electrode plate, and a test method for the ultimate compaction density of the electrode plate is shown as follows. The ultimate compaction density of the electrode plate in this embodiment was 2.68 g/cm³.

17857 particles were counted in the section of the positive electrode film layer along the thickness direction of the electrode plate, and the result showed that the area proportion of the particles with the area of 0.001 um²-0.06 um² was 23.84%, and the area proportion of the particles with the area of 1.0 um²-4.0 um² was 15.01%. The median C₅₀ of the graphitization degree of the positive electrode film layer obtained in the mapping mode of the laser microscopic confocal Raman spectrometer was 1.018, C₉₀ of 1.041, and C₁₀ of 1.007, and the concentration (C₉₀-C₁₀)/C₅₀ was 0.033.

The iron dissolution rate of the positive electrode film layer was 1041 ppm.

### (3) Preparation of negative electrode plate

95.5wt% of the negative electrode active material (artificial graphite), 1.0wt% of the conductive agent (conductive carbon black), 2.0wt% of the binder (styrene butadiene rubber (SBR)) and 1.5wt% of a thickener (sodium carboxymethyl cellulose (CMC)) were mixed, deionized water was added, stirred and dispersed into a negative electrode slurry. The negative electrode slurry was coated on the surfaces of both sides of the Cu foil, and after completing double-sided coating, drying, compacting, slitting, and tabletting were carried out to obtain the negative electrode plate. The surface density of the coated single side was 165 mg/1540 mm², and the compaction density was 1.60 g/cm³.

### (4) Preparation of separator

A polypropylene film was used as the separator.

### (5) Preparation of electrolyte

In an argon atmosphere glove box (H₂O<0.1 ppm, O₂<0.1 ppm), an organic solvent Ethylene Carbonate (EC)/dimethyl carbonate (DMC) was uniformly mixed according to the volume ratio of 1/1, a lithium salt LiPF₆ was dissolved in the organic solvent and uniformly stirred to obtain the electrolyte. The content of LiPF₆ in the solution was 1 mol/L.

### (6) Preparation of battery

The positive electrode plate, the separator and the negative electrode plate were sequentially stacked. The separator could play a role of isolating a positive plate and a negative plate. The positive electrode plate, the separator and the negative electrode plate were wound to obtain a bare cell, the bare cell was placed in the outer package, the electrolyte was injected, then the processes of packaging, formation, gas exhaust and the like were carried out to obtain the lithium-ion battery.

Preparation methods in an Example 2 and an Example 3 were basically the same as the preparation method in the Example 1, and the difference was in adjustment of a carbon source in the raw materials.

### Example 2

Lithium dihydrogen phosphate, ferrous oxalate, polyethylene glycol and glucose (mixed according to the mass ratio of 3:1) and titanium dioxide were uniformly mixed in a solvent, and ground. The molar ratio of iron to phosphorus was 0.965:1.0 due to the ratio of the lithium dihydrogen phosphate to the ferrous oxalate.

### Example 3

Lithium dihydrogen phosphate, ferrous oxalate, polyethylene glycol and glucose (mixed according to the mass ratio of 1:3) and titanium dioxide were uniformly mixed in a solvent, and ground. The molar ratio of iron to phosphorus was 0.965:1.0 due to the ratio of the lithium dihydrogen phosphate to the ferrous oxalate.

The preparation method in an Example 4 was basically the same as that in the Example 3, and the difference was in adjustment of the sintering temperature of precursor powder.

### Example 4

Lithium dihydrogen phosphate, ferrous oxalate, polyethylene glycol and glucose (mixed according to the mass ratio of 1:3) and titanium dioxide were uniformly mixed in a solvent, and ground. The molar ratio of iron to phosphorus was 0.965:1.0 due to the ratio of the lithium dihydrogen phosphate to the ferrous oxalate.

The precursor powder was put into a sintering furnace and subjected to two-stage sintering in a nitrogen atmosphere so as to obtain a lithium iron phosphate positive electrode material: the temperature was raised to 350°C from 25°C at a temperature rise speed of 2°C/min and the temperature was maintained for 3 h; the temperature was raised to 780°C from 350°C at the temperature raising speed of 5°C/min and the temperature was maintained for 10 h; and then, the temperature was decreased to cool the product.

The preparation methods in an Example 5 and an Example 6 were basically the same as the preparation method in the Example 1, and the difference was in the adjustment of the sintering temperature of the precursor powder.

### Example 5

The precursor powder was put into a sintering furnace and subjected to two-stage sintering in a nitrogen atmosphere so as to obtain a lithium iron phosphate positive electrode material: the temperature was raised to 350°C from 25°C at a temperature rise speed of 2°C/min and the temperature was maintained for 3 h; the temperature was raised to 755°C from 350°C at the temperature raising speed of 5°C/min and the temperature was maintained for 10 h; and then, the temperature was decreased to cool the product.

### Example 6

The precursor powder was put into a sintering furnace and subjected to two-stage sintering in a nitrogen atmosphere so as to obtain a lithium iron phosphate positive electrode material: the temperature was raised to 350°C from 25°C at a temperature rise speed of 2°C/min and the temperature was maintained for 3 h; the temperature was raised to 790°C from 350°C at the temperature raising speed of 5°C/min and the temperature was maintained for 10 h; and then, the temperature was decreased to cool the product.

The preparation methods in an Example 7 and an Example 8 were basically the same as the preparation method in the Example 1, and the difference was in the adjustment of the molar ratio of iron to phosphorus.

### Example 7

Lithium dihydrogen phosphate, ferrous oxalate, polyethylene glycol and titanium dioxide were uniformly mixed in a solvent, and ground. The molar ratio of iron to phosphorus was 0.955:1.0 due to the ratio of the lithium dihydrogen phosphate to the ferrous oxalate.

### Example 8

Lithium dihydrogen phosphate, ferrous oxalate, polyethylene glycol and titanium dioxide were uniformly mixed in a solvent, and ground. The molar ratio of iron to phosphorus was 0.975:1.0 due to the ratio of the lithium dihydrogen phosphate to the ferrous oxalate.

The preparation method in an Example 9 was basically the same as that in the Example 1, and the difference was that conductive carbon black was not added when preparing the positive electrode plate; and

97.8wt% of the positive electrode active material and 2.2wt% of PVDF were mixed, and then N-methyl pyrrolidone was added, stirred and dispersed to prepare positive electrode slurry.

The preparation method in a Comparative Example 1 was basically the same as that in the Example 1, and the difference was in the adjustment of the sintering temperature of the carbon source in raw materials and the precursor powder.

### Comparative Example 1

Lithium dihydrogen phosphate, ferrous oxalate, glucose and titanium dioxide were uniformly mixed in a solvent, and ground. The molar ratio of iron to phosphorus was 0.965:1.0 due to the ratio of the lithium dihydrogen phosphate to the ferrous oxalate.

The precursor powder was put into a sintering furnace and subjected to two-stage sintering in a nitrogen atmosphere so as to obtain a lithium iron phosphate positive electrode material: the temperature was raised to 350°C from 25°C at a temperature rise speed of 2°C/min and the temperature was maintained for 3 h; the temperature was raised to 740°C from 350°C at the temperature raising speed of 5°C/min and the temperature was maintained for 10 h; and then, the temperature was decreased to cool the product.

The preparation method in a Comparative Example 2 was basically the same as that in the Example 1, and the difference was in the adjustment of the molar ratio of the iron to the phosphorus and the sintering temperature of the precursor powder.

### Comparative Example 2

Lithium dihydrogen phosphate, ferrous oxalate, polyethylene glycol and titanium dioxide were uniformly mixed in a solvent, and ground. The molar ratio of iron to phosphorus was 0.955:1.0 due to the ratio of the lithium dihydrogen phosphate to the ferrous oxalate.

The precursor powder was put into a sintering furnace and subjected to two-stage sintering in a nitrogen atmosphere so as to obtain a lithium iron phosphate positive electrode material: the temperature was raised to 350°C from 25°C at a temperature rise speed of 2°C/min and the temperature was maintained for 3 h; the temperature was raised to 810°C from 350°C at the temperature raising speed of 5°C/min and the temperature was maintained for 10 h; and then, the temperature was decreased to cool the product.

### Performance test

### 1. Energy density test

The lithium-ion secondary battery was stood at 25°C for 2 h to ensure that the temperature of the lithium-ion secondary battery was 25°C. The lithium-ion secondary battery was charged with 0.33 C at 25°C until reaching charge cut-off voltage of 3.65 V, and then was continuously charged with the charge cut-off voltage in a constant voltage way until the current was 0.05 C, then charging was cut off (C represented the rated capacity of the lithium-ion secondary battery). The lithium-ion secondary battery was stood at 25°C for 1 h, then was discharged with 0.33 C at 25°C until reaching the discharge cut-off voltage of 3.65 V, and the total discharging energy of the lithium-ion secondary battery was recorded as E₀.

The length, width and height of a battery cell were measured, and the volume of the battery cell was calculated as V₀=length*width*height. Volume energy density of lithium-ion secondary battery = discharging energy E₀ of lithium-ion secondary battery/ volume V₀ of lithium-ion secondary battery.

### 2. Direct Current Resistance (DCR) test method

The method included: at 25°C, after charging to 3.65 V with constant current of 0.33 C, charge with constant voltage until reaching current of 0.05 C, and then discharge with 0.33 C until reaching SOC of 20%; stand for 5 min and then perform pulse discharging with 3 C for 30 s; stand for 40 s, and then charge with 3 C for 40 s; stand for 5 min, and after charging to 3.65 V with constant current of 0.33 C, charge to 0.05 C with constant voltage, and then discharge with 0.33 C until reaching SOC of 10%; stand for 5 min, and then perform pulse discharging with 3 C for 30 s; stand for 40 s, and then charge with 3 C for 40 s; stand for 5 min, and after fully charging with 0.33 C, discharge with 0.33 C until reaching SOC of 50%; stand at -25°C for 2 h, and then perform pulse discharging with 1 C for 30 s, and stand for 10 min; then stand at 25°C for 2 h, charge to 3.65 V with constant current of 0.33 C and then charge to 0.05 C with constant voltage; then discharge with 0.33 C until reaching SOC of 20%; after standing at - 25°C for 2 h, perform pulse discharging with 1 C for 30 s, and stand for 10 min.

The voltage before and after each pulse discharging was recorded, the DCR under different conditions was calculated by the formula DCR = (voltage after standing and before pulse discharging - voltage after pulse discharging and before standing)/pulse current.

### 3. Ultimate compaction density of electrode plate

The electrode plate coated on both sides was compacted by a roller press, the elongation of the compacted electrode plate was tested, and the flexibility of the compacted electrode plate was evaluated. The electrode plates with different compaction densities could be obtained by increasing the pressure of the roller press. The compaction density of the electrode plate increased along with the increase of the pressure, the elongation of the electrode plate could be increased, and the flexibility of the electrode plate was reduced. Excessively high elongation of the electrode plate might cause warping of the electrode plate, and excessively low flexibility of the electrode plate may cause brittle failure of the electrode plate. Therefore, the smaller one of the compaction densities corresponding to the elongation of the electrode plate of 8% or the compaction density corresponding to the number of flexible folding of the electrode plate being 3 times was defined as the ultimate compaction density of the electrode plate.

The compaction density was calculated by mass of positive electrode film layer/volume of the positive electrode film layer.

A test method for the elongation is as follows:
flatly lay the electrode plate on a horizontal table top, and cut the electrode plate into sections, where a length of each electrode plate was about 100 cm; remove a base material copper foil on the edge of the electrode plate, pay attention to keep the cutting edge of the electrode plate parallel to the MD direction (vertical to the direction of the compression roller) of the electrode plate to ensure that the electrode plate was partially completely covered by the coating, measure the length between mark points at different positions with the same width in the length direction at the head and tail of the electrode plate by a steel ruler, estimate the length to be 0.1 mm, and record the length before compaction; and record the length between the corresponding mark points after compaction, and take the (the length after compaction - the length before compaction)/the length before compaction as the elongation of the electrode plate.

A method for testing the number of flexible folding is as follows.

The positive electrode plate was cut into a test sample with the size of 20×100 mm². The test sample was symmetrically folded in the forward direction, flattened with a 2 kg compression roller, and unfolded to face light for checking whether there was light transmission in a gap. If there was no light transmission, the test sample was symmetrically folded in the reverse direction, flattened with the 2 kg compression roller, and then checked again in the light. The process was repeated until there was light transmission in the gap, and the number of symmetric folding was recorded. The test was repeated three times, and a mean value was obtained as the reference data of the flexibility of the electrode plate.

### Test results

**Table 1**

| | Carbon source | Sintering temperature/° C | Fe/P | Mass content of conductive agent | Graphitization degree C₅₀ | Concentration of C value | D_{A50}/ nm | Area proportion of particles with area of 0.001 µm²-0.06 µm²/% | Area proportion of particles with area of 1 µm²-4 µm²/% |
|---|---|---|---|---|---|---|---|---|---|
| Example 1 | PEG | 770 | 0.96 5 | 0.80% | 1.018 | 0.033 | 730 | 23.84 | 15.01 |
| Example 2 | PEG: glucose=3: 1 | 770 | 0.96 5 | 0.80% | 1.012 | 0.034 | 733 | 23.55 | 15.29 |
| Example 3 | PEG: glucose=1: 3 | 770 | 0.96 5 | 0.80% | 0.987 | 0.036 | 735 | 23.10 | 15.59 |
| Example 4 | PEG: glucose=1: 3 | 780 | 0.96 5 | 0.80% | 1.016 | 0.04 | 746 | 22.34 | 17.11 |
| Example 5 | PEG | 755 | 0.96 5 | 0.80% | 0.965 | 0.028 | 702 | 26.01 | 12.89 |
| Example 6 | PEG | 790 | 0.96 5 | 0.80% | 1.125 | 0.04 | 767 | 21.45 | 19.78 |
| Example 7 | PEG | 770 | 0.95 5 | 0.80% | 1.029 | 0.032 | 736 | 22.63 | 15.87 |
| Example 8 | PEG | 770 | 0.97 5 | 0.80% | 1.005 | 0.036 | 724 | 24.76 | 14.21 |
| Example 9 | PEG | 770 | 0.96 5 | 0.00% | 1.018 | 0.033 | 730 | 23.84 | 15.01 |
| Comparative Example 1 | Glucose | 740 | 0.96 5 | 0.80% | 0.92 | 0.045 | 637 | 27.54 | 11.66 |
| Comparative Example 2 | PEG | 810 | 0.95 5 | 0.80% | 1.16 | 0.054 | 815 | 20.01 | 21.88 |

**Table 2**

| | Compaction density of electrode plate after formation and full discharge g/cm³ | Energy density Wh/L | DCR | DCR |
|---|---|---|---|---|
| | | | 25°C 3 C | -25°C 1 C |
| | | | 20%SOC/mΩ | 50%SOC/mΩ |
| Example 1 | 2.56 | 445.0 | 43.1 | 387.9 |
| Example 2 | 2.57 | 446.7 | 44.9 | 407.3 |
| Example 3 | 2.58 | 444.3 | 47.4 | 426.3 |
| Example 4 | 2.6 | 447.6 | 47.8 | 430.6 |
| Example 5 | 2.52 | 438.4 | 40.6 | 360.0 |
| Example 6 | 2.61 | 446.5 | 47.5 | 425.9 |
| Example 7 | 2.57 | 444.0 | 45.5 | 424.8 |
| Example 8 | 2.54 | 441.7 | 41.2 | 371.2 |
| Example 9 | 2.56 | 448.7 | 43.5 | 391.2 |
| Comparative Example 1 | 2.4 | 418.4 | 44.6 | 401.5 |
| Comparative Example 2 | 2.62 | 443.6 | 50.6 | 454.2 |

According to the comparison of the Examples with the Comparative Examples, in the cumulative distribution curve of the C value of the graphitization degree of the positive electrode film layer obtained in the mapping mode of the laser microscopic confocal Raman spectrometer, the median C₅₀ of the graphitization degree is greater than or equal to 0.95 and less than or equal to 1.20, and the concentration (C₉₀-C₁₀)/C₅₀ of C value is 0.01-0.04. The compaction density of the positive electrode plate is improved while the battery maintains low internal resistance (especially low impedance at low SOC), so that the compaction density of the electrode plate and the energy density of the battery are improved based on keeping good kinetic performance of the battery.

According to the comparison of the Example 5 with the Example 1 to the Example 4 and the Example 6 to the Example 9, in the cumulative distribution curve of the C value of the graphitization degree of the positive electrode active material obtained in the mapping mode of the laser microscopic confocal Raman spectrometer, when the median C₅₀ of the graphitization degree is 0.98-1.13, it is conducive to improving the compaction density of the electrode plate based on keeping the low impedance of the battery, thus improving the energy density of the battery based on keeping the good kinetic performance of the battery.

According to the comparison of the Example 4 and the Example 6 with the Example 2, in the cumulative distribution curve of the C value of the graphitization degree of the positive electrode active material obtained in the mapping mode of the laser microscopic confocal Raman spectrometer, when the concentration (C₉₀-C₁₀)/C₅₀ of the C value is 0.02-0.038, it indicates that the coating layer of the positive electrode active material has relatively high uniformity, which is conducive to keeping high compaction density of the electrode plate, and further improving the kinetic performance of the battery based on the energy density of the electrode plate.

According to the comparison of the Example 9 with the Example 1, the lithium-ion secondary battery provided by this embodiment of the present application still has good kinetic performance when the conductive agent is not added, and moreover, the energy density of the lithium-ion secondary battery is further improved.

It is noted that the present application is not limited to the above implementations. The above implementations are only examples, and implementations that have the same composition and exert the same effect as the technical ideas within the scope of the technical solution of the present application are included in the technical scope of the present application. In addition, other methods that apply various deformations that can be conceived by those skilled in the art to the implementations and construct them by combining some of the constituent elements of the implementations are also included in the scope of the present application, within the scope of the application that do not deviate from the main purpose of the present application.

## Claims

1. A lithium-ion secondary battery, comprising a positive electrode plate, a negative electrode plate and an electrolyte, wherein
the positive electrode plate comprises a positive electrode current collector and a positive electrode film layer arranged on at least one side of the positive electrode current collector;
the positive electrode film layer comprises a positive electrode active material, and the positive electrode active material comprises lithium-containing transition metal phosphate particles with at least partial surfaces provided with carbon-coated materials; and
in a cumulative distribution curve of a C value of a graphitization degree of the positive electrode film layer obtained in a mapping mode of a laser microscopic confocal Raman spectrometer, a median C₅₀ of the graphitization degree is greater than or equal to 0.95 and less than or equal to 1.20, and a concentration (C₉₀-C₁₀)/C₅₀ of the C value is 0.01-0.04, wherein
the C value of the graphitization degree is I_{G}/I_{D}, the I_{G} represents a G-band intensity of a Raman spectrum at 1580±100 cm⁻¹, and the I_{D} represents a D-band intensity of the Raman spectrum at 1350±100 cm⁻¹.

2. The lithium-ion secondary battery according to claim 1, wherein in the cumulative distribution curve of the C value of the graphitization degree of the positive electrode film layer obtained in the mapping mode of the laser microscopic confocal Raman spectrometer, the median C₅₀ of the graphitization degree is 0.96-1.15.

3. The lithium-ion secondary battery according to claim 1, wherein in the cumulative distribution curve of the C value of the graphitization degree of the positive electrode film layer obtained in the mapping mode of the laser microscopic confocal Raman spectrometer, the median C₅₀ of the graphitization degree is 0.98-1.13.

4. The lithium-ion secondary battery according to claim 1, wherein in the cumulative distribution curve of the C value of the graphitization degree of the positive electrode film layer obtained in the mapping mode of the laser microscopic confocal Raman spectrometer, the concentration (C₉₀-C₁₀)/C₅₀ of the C value is 0.02-0.038.

5. The lithium-ion secondary battery according to claim 1, wherein in the cumulative distribution curve of the C value of the graphitization degree of the positive electrode film layer obtained in the mapping mode of the laser microscopic confocal Raman spectrometer, the concentration (C₉₀-C₁₀)/C₅₀ of the C value is 0.02-0.036.

6. The lithium-ion secondary battery according to claim 1, wherein in the cumulative distribution curve of the C value of the graphitization degree of the positive electrode film layer obtained in the mapping mode of the laser microscopic confocal Raman spectrometer, the C₉₀ of the graphitization degree is 1.0-1.30.

7. The lithium-ion secondary battery according to claim 1, wherein in the cumulative distribution curve of the C value of the graphitization degree of the positive electrode film layer obtained in the mapping mode of the laser microscopic confocal Raman spectrometer, the C₉₀ of the graphitization degree is 1.02-1.15.

8. The lithium-ion secondary battery according to claim 1, wherein in the cumulative distribution curve of the C value of the graphitization degree of the positive electrode film layer obtained in the mapping mode of the laser microscopic confocal Raman spectrometer, the C₁₀ of the graphitization degree is 0.92-1.10.

9. The lithium-ion secondary battery according to claim 1, wherein in the cumulative distribution curve of the C value of the graphitization degree of the positive electrode film layer obtained in the mapping mode of the laser microscopic confocal Raman spectrometer, the C₁₀ of the graphitization degree is 0.98-1.08.

10. The lithium-ion secondary battery according to claim 1, wherein in a section of the positive electrode film layer along a thickness direction of the electrode plate, an area proportion of particles with an area of 0.001 µm²-0.06 µm² is 21.00%-27.00%, and an area proportion of particles with an area of 1.0 µm²-4.0 µm² is 12.00%-20.00%.

11. The lithium-ion secondary battery according to claim 1, wherein in a section of the positive electrode film layer along a thickness direction of the electrode plate, D_{A50} of the particles is 600 nm-800 nm, wherein the D_{A50} refers to a particle size corresponding to a cumulative area distribution of the particles reaching 50% in an area cumulative distribution curve of the particles.

12. The lithium-ion secondary battery according to claim 11, wherein in the section of the positive electrode film layer along the thickness direction of the electrode plate, the D_{A50} of the particles is 650 nm-750 nm, wherein the D_{A50} refers to the particle size corresponding to the cumulative area distribution of the particles reaching 50% in the area cumulative distribution curve of the particles.

13. The lithium-ion secondary battery according to claim 1, wherein in an area cumulative distribution curve of a particle roughness obtained in a section of the positive electrode film layer along a thickness direction of the electrode plate, a median R_{A50} of the roughness is 0.92-0.96.

14. The lithium-ion secondary battery according to claim 1, wherein in an area cumulative distribution curve of a particle quasi-roundness obtained in a section of the positive electrode film layer along a thickness direction of the electrode plate, an L_{A90} of the quasi-roundness is 0.80-0.95.

15. The lithium-ion secondary battery according to claim 14, wherein in the area cumulative distribution curve of the particle quasi-roundness obtained in the section of the positive electrode film layer along the thickness direction of the electrode plate, the L_{A90} of the quasi-roundness is 0.85-0.93.

16. The lithium-ion secondary battery according to claim 1, wherein in an area cumulative distribution curve of a particle quasi-roundness obtained in a section of the positive electrode film layer along a thickness direction of the electrode plate, a median L_{A50} of the quasi-roundness is 0.65-0.85.

17. The lithium-ion secondary battery according to claim 16, wherein in the area cumulative distribution curve of the particle quasi-roundness obtained in the section of the positive electrode film layer along the thickness direction of the electrode plate, the median L_{A50} of the quasi-roundness is 0.70-0.80.

18. The lithium-ion secondary battery according to claim 1, wherein an iron dissolution rate of the positive electrode film layer is 500 ppm-2000 ppm.

19. The lithium-ion secondary battery according to claim 18, wherein the iron dissolution rate of the positive electrode film layer is 500 ppm-1500 ppm.

20. The lithium-ion secondary battery according to claim 1, wherein based on a total mass of the positive electrode active material, a mass content of a carbon element is 0.8%-1.8%.

21. The lithium-ion secondary battery according to claim 20, wherein based on the total mass of the positive electrode active material, the mass content of the carbon element is 0.90%-1.5%.

22. The lithium-ion secondary battery according to claim 1, wherein a lithium-iron antisite defect concentration of the positive electrode active material is 0.1%-1.5%.

23. The lithium-ion secondary battery according to claim 22, wherein the lithium-iron antisite defect concentration of the positive electrode active material is 0.3%-1.0%.

24. The lithium-ion secondary battery according to claim 1, wherein the lithium-containing transition metal phosphate comprises a component having the following general formula:
LiₘFeₓP_{y}OⱼQ_{q},
wherein
Q comprises one or more of Al, Na, K, Mg, Cu, Mn, Cr, Zn, Pb, Ca, Co, Ni, Sr, Nb, V, Ti, B, S, Si, N, F, Cl, and Br; and 0.8≤m≤1.15, 0.9≤x≤1, 0.95≤y≤1, 3.5≤j≤4, and 0<q≤0.1.

25. The lithium-ion secondary battery according to claim 1, wherein the positive electrode active material comprises one or more of lithium iron phosphate, a doped modifying material thereof, and a coated modifying material thereof.

26. The lithium-ion secondary battery according to claim 1, wherein the positive electrode active material comprises a titanium element, and based on a total mass of the positive electrode active material, a mass content of the titanium element is 2000 ppm-6000 ppm.

27. The lithium-ion secondary battery according to claim 1, wherein a powder tap density of the positive electrode active material is 0.70 g/cm³-1.50 g/cm³.

28. The lithium-ion secondary battery according to claim 27, wherein the powder tap density of the positive electrode active material is 0.70 g/cm³-1.20 g/cm³.

29. The lithium-ion secondary battery according to claim 1, wherein a powder compaction density of the positive electrode active material under a pressure of 3T is 2.50 g/cm³-2.70 g/cm³.

30. The lithium-ion secondary battery according to claim 29, wherein the powder compaction density of the positive electrode active material under the pressure of 3T is 2.52 g/cm³-2.68 g/cm³.

31. The lithium-ion secondary battery according to claim 1, wherein a powder resistivity of the positive electrode active material under a pressure of 8 MPa is 0.5 Ω•cm-30 Ω•cm.

32. The lithium-ion secondary battery according to claim 31, wherein the powder resistivity of the positive electrode active material under the pressure of 8 MPa is 2 Ω•cm-20 Ω•cm.

33. The lithium-ion secondary battery according to claim 1, wherein a discharge capacity per gram of the positive electrode active material at room temperature and under a discharge rate of 1 C is 135 mAh/g-150 mAh/g.

34. The lithium-ion secondary battery according to claim 1, wherein a proportion of a discharge capacity of the positive electrode active material discharged to 3.2 V is shown as η≥85%, and the η is defined as follows: at room temperature, a button cell containing the positive electrode active material is charged and discharged twice at constant current with a rate of 0.1 C within a voltage range of 2.0 V-3.75 V, and then is charged and discharged once at constant current with the rate of 1 C; and in a charge-discharge test with the rate of 1 C, an extracted capacity value under a discharge voltage of 3.2 V is recorded as C₁, the extracted capacity value under the discharge voltage of 2.0 V is recorded as C₂, and η=C₁/C₂, wherein a charging process comprises constant-voltage charging, with a constant voltage of 3.75 V, and a constant-voltage cut-off current of 50 µA.

35. The lithium-ion secondary battery according to claim 1, wherein based on a total mass of the positive electrode film layer, a mass content of a conductive agent is 0%-1.5%.

36. The lithium-ion secondary battery according to claim 1, wherein based on a total mass of the positive electrode film layer, a mass content of the conductive agent is 0.

37. The lithium-ion secondary battery according to claim 1, wherein the positive electrode film layer further comprises a binder, and based on a total mass of the positive electrode film layer, a mass content of the positive electrode active material is 95.5%-99.5%; and a mass content of the binder is 0.5%-3%.

38. The lithium-ion secondary battery according to claim 37, wherein based on the total mass of the positive electrode film layer, the mass content of the positive electrode active material is 96.5%-99.5%.

39. The lithium-ion secondary battery according to claim 1, wherein a single-side surface density of the positive electrode film layer is 300 mg/1540 mm²-450 mg/1540 mm².

40. The lithium-ion secondary battery according to claim 1, wherein when the lithium-ion secondary battery is in a full-discharge state, a compaction density of the positive electrode film layer is 2.51 g/cm³-2.73 g/cm³.

41. The lithium-ion secondary battery according to claim 1, wherein when the lithium-ion secondary battery is in a full-discharge state, a compaction density of the positive electrode film layer is 2.55 g/cm³-2.70 g/cm³.

42. The lithium-ion secondary battery according to claim 1, wherein the positive electrode film layer meets at least one of the following conditions:
(1) when the lithium-ion secondary battery is in a full-discharge state, a compaction density of the positive electrode film layer is 2.51 g/cm³-2.73 g/cm³, and in a section of the positive electrode film layer along a thickness direction of the electrode plate, a porosity of the positive electrode film layer is 10%-22%; and
(2) when the lithium-ion secondary battery is in the full-discharge state, the compaction density of the positive electrode film layer is 2.55 g/cm³-2.70 g/cm³, and in the section of the positive electrode film layer along the thickness direction of the electrode plate, the porosity of the positive electrode film layer is 10%-20%.

43. The lithium-ion secondary battery according to claim 1, wherein the positive electrode plate comprises a bottom coating, and the bottom coating is arranged between the positive electrode film layer and the current collector; and the bottom coating meets at least one of the following conditions:
(1) the bottom coating comprises carbon-based particles, and a distribution density of carbon-based particles with a particle size greater than 100 nm in the bottom coating is ≤10 pcs/10 µm;
(2) a compaction density of the positive electrode plate in a full-discharge state is greater than or equal to 2.4 g/cm³, and a single-side thickness of the bottom coating is 1 µm-4 µm and
(3) the compaction density of the positive electrode plate in the full-discharge state is greater than or equal to 2.5 g/cm³, and the single-side thickness of the bottom coating is 2 µm-4 µm.

44. A battery apparatus, comprising the lithium-ion secondary battery according to any one of claims 1 to 43, wherein the battery apparatus comprises at least one of a battery module, a battery pack, and an energy storage battery.

45. A power consuming apparatus, comprising the lithium-ion secondary battery according to any one of claims 1 to 43 or the battery apparatus according to claim 44.

46. A preparation method for a positive electrode active material, comprising: obtaining a mixed raw material comprising a carbon source, a lithium source, an iron source and a phosphorus source, wherein the carbon source comprises polyethylene glycol, the iron source comprises ferrous iron, and a molar ratio of iron to phosphorus in the mixed raw material is greater than or equal to 0.95 and less than or equal to 1; grinding the mixed raw material in a solvent to obtain a mixed slurry; drying the mixed slurry to obtain a precursor powder; and sintering the precursor powder to obtain the positive electrode active material, wherein the sintering comprises at least two stages of constant-temperature sintering, and a sintering temperature at a high-temperature stage is 750°C-800°C.

47. A preparation method for a positive electrode plate, comprising: sequentially adding a binder, a conductive agent, and the positive electrode active material prepared by the preparation method according to claim 46, carrying out dry mixing, then adding a solvent, and stirring to obtain a discharged slurry; and transferring and coating the discharged slurry to at least one side of a current collector, drying, and carrying out hot pressing to obtain the positive electrode plate.

48. The preparation method according to claim 46, wherein a revolution speed in dry mixing is 20 rpm-30 rpm, and a rotation speed in dry mixing is 750 rpm-850 rpm.

49. The preparation method according to claim 46, wherein the hot pressing comprises at least three times of hot rolling, and hot rolling pressures are sequentially increased, and the hot rolling pressures are sequentially 20 tons-50 tons, 50 tons-70 tons, and 70 tons-90 tons; and a hot roller temperature is 40°C-80°C, the electrode plate is heated before entering a hot roller compaction for a first time, and a temperature of a heating is 40°C-50°C.
